(19) Europäisches Patentamt
European Patent Office
Office européen des brevets

(11) **EP 3 232 627 B1**

(12) **FASCICULE DE BREVET EUROPEEN**

(45) Date de publication et mention
de la délivrance du brevet:
**10.03.2021   Bulletin 2021/10**

(51) Int Cl.:
***H04L 27/26*** *(2006.01)*

(21) Numéro de dépôt: **17166149.9**

(22) Date de dépôt: **12.04.2017**

(54) **RÉCEPTEUR POUR SYSTÈME FBMC À CODAGE SPATIO-TEMPOREL DE TYPE ALAMOUTI PAR BLOCS**

EMPFÄNGER FÜR FBMC-SYSTEM MIT RAUM-ZEIT-BLOCKKODIERVERFAHREN VOM TYP ALAMOUTI

RECEIVER FOR FBMC SYSTEM WITH ALAMOUTI SPACE-TIME BLOCK CODING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **13.04.2016   FR 1653277**

(43) Date de publication de la demande:
**18.10.2017   Bulletin 2017/42**

(73) Titulaire: **Commissariat à l'Energie Atomique et aux Energies Alternatives 75015 Paris (FR)**

(72) Inventeur: **DORE, Jean-Baptiste 38120 Fontanil-Cornillon (FR)**

(74) Mandataire: **Brevalex 56, Boulevard de l'Embouchure B.P. 27519 31075 Toulouse Cedex 2 (FR)**

(56) Documents cités:
**US-A1- 2014 348 252**

- **MARKKU RENFORS ET AL: "A block-Alamouti scheme for filter bank based multicarrier transmission", WIRELESS CONFERENCE (EW), 2010 EUROPEAN, IEEE, PISCATAWAY, NJ, USA, 12 avril 2010 (2010-04-12), pages 1031-1037, XP031688570, ISBN: 978-1-4244-5999-5**
- **MAURICE BELLANGER: "FS-FBMC: An alternative scheme for filter bank based multicarrier transmission", COMMUNICATIONS CONTROL AND SIGNAL PROCESSING (ISCCSP), 2012 5TH INTERNATIONAL SYMPOSIUM ON, IEEE, 2 mai 2012 (2012-05-02), pages 1-4, XP032188167, DOI: 10.1109/ISCCSP.2012.6217776 ISBN: 978-1-4673-0274-6**
- **R Zakaria ET AL: "On interference cancellation in Alamouti coding scheme for filter bank based multicarrier systems", , 27 août 2013 (2013-08-27), XP055324856, Extrait de l'Internet: URL:http://ieeexplore.ieee.org/iel7/662968 2/6629683/06629689.pdf [extrait le 2016-11-30]**

**EP 3 232 627 B1**

**Description**

**DOMAINE TECHNIQUE**

La présente invention concerne de manière générale le domaine des systèmes de télécommunication utilisant une modulation multi-porteuse à banc de filtres, encore dénommés systèmes FBMC (Filter Bank Multi-Carrier). Il concerne également les systèmes de télécommunication MISO (Multiple Input Single Output) voire MIMO (Multiple Input Multiple Output) utilisant un codage spatio-temporel.

**ÉTAT DE LA TECHNIQUE ANTÉRIEURE**

Les systèmes de télécommunication utilisant une modulation multi-porteuse sont bien connus dans l'état de la technique. Le principe d'une telle modulation consiste à diviser la bande de transmission en une pluralité de sous-canaux fréquentiels associés à des sous-porteuses et à moduler chacune de ces sous-porteuses par les données à transmettre.

La modulation multi-porteuse la plus répandue est sans aucun doute la modulation OFDM (Orthogonal Frequency Division Multiplexing). Toutefois, l'occupation spectrale d'un signal OFDM étant sensiblement plus importante que la bande de sous-porteuses qu'il utilise en raison de l'étalement des lobes secondaires, la modulation OFDM n'est pas une solution optimale pour des applications nécessitant de forts taux de réjection hors bande.

La modulation par banc de filtres ou FBMC (Filter Bank Multi Carrier) est une modulation multi-porteuse permettant d'obtenir une meilleure localisation spectrale dans la bande de sous-porteuses. Elle est en outre l'une des solutions possibles pour les systèmes de télécommunication de la cinquième génération.

Le principe de la modulation FBMC est basé sur une synthèse par banc de filtres à l'émission et une analyse par banc de filtres à la réception, le produit de la fonction de transfert d'un filtre à l'émission par la fonction de transfert du filtre correspondant à la réception étant égale à la fonction de transfert du filtre de Nyquist.

Les systèmes FBMC sont classiquement implémentés dans le domaine temporel.

La structure d'un système FBMC implémenté dans le domaine temporel a été décrite en détail dans l'article de B. Hirosaki intitulé « An orthogonally multiplexed QAM system using the discrète Fourier transform » publié dans IEEE Trans on Comm., vol. 29 No. 7, pp. 982-989, Juillet 1981, ainsi que dans l'article de P. Siohan et al. intitulé « Analysis and design of OFDM/OQAM systems based on filterbank theory" publié dans IEEE Trans. on signal processing, vol. 50, No 5, pp. 1170-1183, Mai 2002. Les systèmes FBMC implémentés dans le domaine temporel font appel à des réseaux de filtres polyphasés d'où leur dénomination PPN-FBMC (Polyphase Network FBMC).

Plus récemment, il a été proposé d'implémenter un système FBMC dans le domaine fréquentiel comme décrit dans le document de M. Bellanger *et al.* intitulé « FBMC physical layer : a primer » disponible sur le site www.ict-phydyas.org. Les systèmes FBMC implémentés dans le domaine fréquentiel font appel à un étalement spectral d'où leur dénomination de FS-FBMC (Frequency Spread FBMC).

Un autre article correspondant du même auteur sur le FS-FBMC est: MAURICE BELLANGER: "FS-FBMC: An alternative scheme for filter bank based multicarrier transmission",COMMUNICATIONS CONTROL AND SIGNAL PROCESSING (ISCCSP), 2012 5TH INTERNATIONAL SYMPOSIUM ON, IEEE, 2 mai 2012.

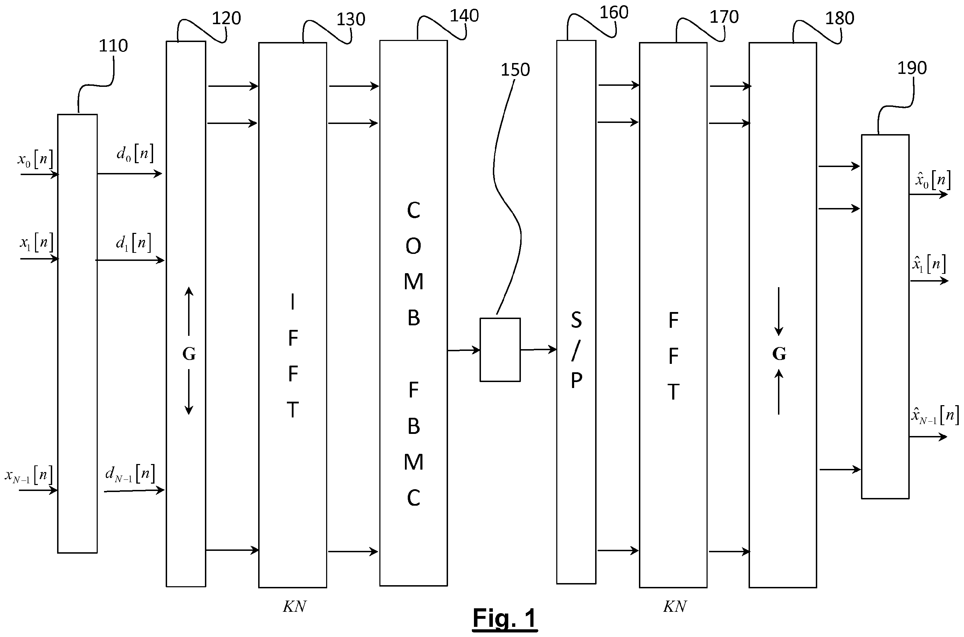

La structure d'un système FS-FBMC est représentée en Fig. 1.

Au niveau de l'émetteur, les symboles de modulation QAM à transmettre avec une cadence $Nf$ avec $f = 1/T$ sont regroupés par blocs de taille $N$, $x_0[n],...,x_{N-1}[n]$ où $n$ est l'indice temporel du bloc. Chaque bloc de $N$ symboles est fourni en parallèle à $N$ voies d'entrée d'un module de prétraitement, 110, dit prétraitement OQAM (Offset QAM). Ce module de prétraitement a pour fonction de démultiplexer la partie réelle et la partie imaginaire des symboles d'entrée avec une fréquence $2f$ de sorte que deux échantillons transmis au même instant sur deux sous-canaux successifs ou deux échantillons transmis en deux instants successifs sur un même sous-canal sont l'un réel et l'autre imaginaire. Chacune des $N$ voies de sortie du module de prétraitement 110 correspond à un sous-canal.

Chaque sous-canal est ensuite étalé sur un intervalle de $2K$-1 sous-porteuses adjacentes, centré sur une sous-porteuse centrale du sous-canal. Plus précisément, chaque donnée OQAM est étalée sur $2K$-1 sous-porteuses adjacentes et pondérée par la valeur (réelle) prise par la fonction de transfert du filtre de synthèse à la fréquence correspondante.

On a désigné par 120 le module d'étalement en fréquence et de filtrage par le filtre prototype. Chaque donnée OQAM $d_i[n]$ en entrée du module 120 est étalée sur $2K$-1 sous-porteuses adjacentes pour donner :

$$\breve{d}_{i,k}[n] = d_i[n]G_k, \ k = -K+1,...,0,..K-1 \qquad (1)$$

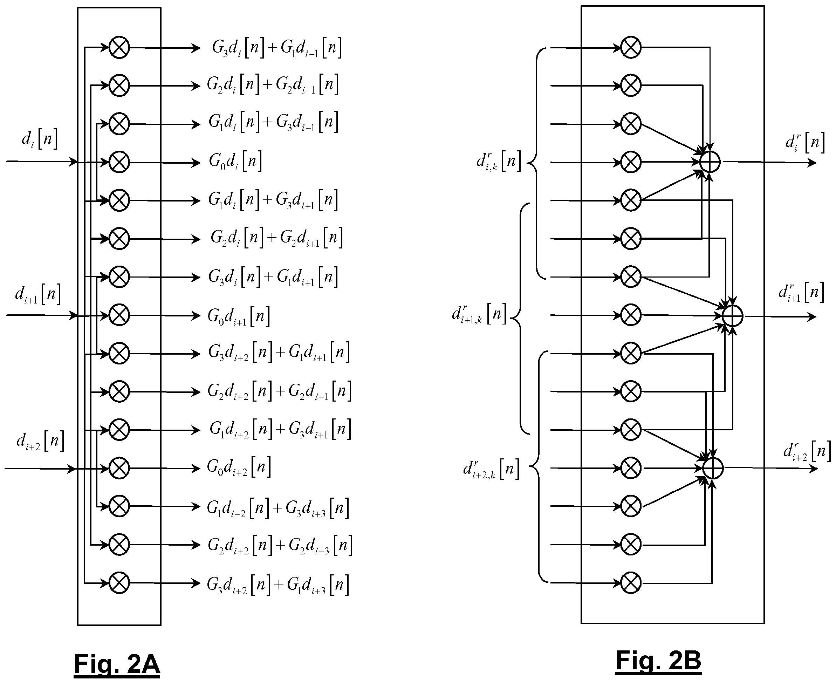

Les données de même parité $i$ et $i$ + 2 sont séparées spectralement et celles de parités contraires $i$ et $i$ + 1 se chevauchent comme représenté en Fig. 2A. Ce chevauchement n'engendre toutefois pas d'interférence puisque deux données de parités contraires sont nécessairement respectivement situées sur l'axe réel et l'axe imaginaire et séparées de $T/2$. Par exemple, en Fig. 2A, les données $d_i[n]$ et $d_{i+2}[n]$ sont des valeurs réelles (représentées en traits continus) alors que la donnée $d_{i+1}[n]$ est une valeur imaginaire (représentée par des traits en pointillés). Les valeurs imaginaires sont présentées à l'entrée du module de IFFT avec un décalage de $T/2$ par rapport aux valeurs réelles. L'orthogonalité dans le plan complexe est conservée par le filtrage par le filtre prototype étant donné que les coefficients $G_k$ sont réels.

Les données étalées en fréquence et filtrées font ensuite l'objet d'une IFFT de taille $KN$ en 130.

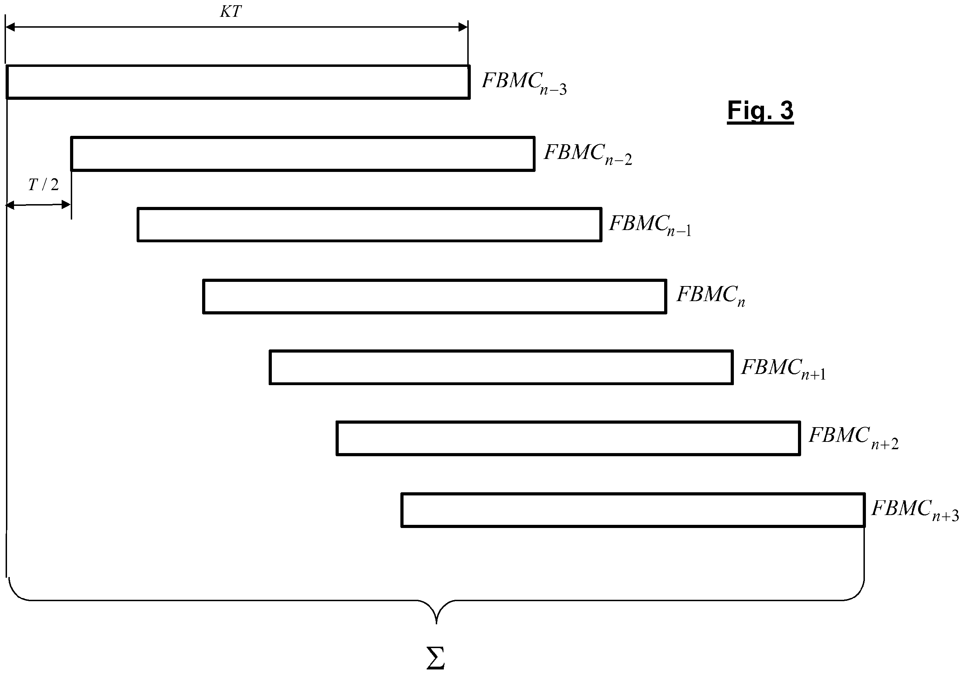

Le bloc d'échantillons temporels en sortie de la IFFT est combiné au moyen du module de combinaison 140 comme indiqué en Fig. 3. L'ensemble des échantillons en sortie de l'IFFT représente un symbole FBMC dans le domaine temporel, deux symboles FBMC successifs étant décalés de $T/2$ (autrement dit de $N/2$ échantillons) et les symboles FBMC ayant chacun une durée $KT$ (autrement dit une taille de $KN$ échantillons). Un symbole FBMC est combiné dans le module 140 avec les $K$-1 symboles FBMC précédents et $K$-1 symboles FBMC suivants. Pour cette raison $K$ est encore appelé facteur de chevauchement (*overlapping factor*) ou d'entrelacement. On notera qu'un échantillon en sortie du module de combinaison 140 est la somme de $2K$-1 échantillons de symboles FBMC consécutifs.

Le signal ainsi obtenu est ensuite translaté sur une fréquence porteuse.

Après transmission sur le canal 150, le signal reçu, démodulé en bande de base, est échantillonné par le récepteur à la cadence $Nf$ puis converti en blocs de taille $KN$ par le convertisseur série-parallèle 160.

Une FFT glissante (la fenêtre de la FFT glissant de $N/2$ échantillons entre deux calculs de FFT) de taille $KN$ est effectuée dans le module FFT, 170, sur des blocs de $KN$ échantillons consécutifs en sortie du convertisseur série-parallèle 160.

Les sorties de la FFT sont ensuite soumises à un filtrage et un désétalement spectral dans le module 180. L'opération de désétalement a lieu dans le domaine fréquentiel comme représenté en Fig. 2B. Plus précisément, les échantillons $\breve{d}_{i,k}^{r}[n]$, $k = -K+1,...,0,...K$-1 correspondant aux $2K$-1 fréquences $(i-1)K+1,...iK,...$ $(i+1)K$-1 de la FFT sont multipliés par les valeurs de la fonction de transfert du filtre d'analyse (translatée en fréquence de celle du filtre prototype) aux fréquences en question et les résultats obtenus sont sommés, soit :

$$d_i^r[n] = \sum_{k=-K+1}^{K-1} G_k \breve{d}_{i,k}^r[n] \qquad (2)$$

On notera que, comme en Fig. 2A, l'obtention de données ayant des rangs de même parité, par exemple $d_i^r[n]$ et $d_{i+2}^r[n]$, fait appel à des blocs d'échantillons disjoints alors que ceux de deux rangs consécutifs, de parités inverses, se chevauchent. Ainsi, l'obtention de la donnée $d_{i+1}^r[n]$ fait appel aux échantillons $\breve{d}_{i,k}^r[n]$, $k = 1,...,K$ - 1 ainsi qu'aux échantillons $\breve{d}_{i+2,k}^r[n]$, $k = -K+1,...,1$.

Le désétalement de données réelles est représenté par des traits continus alors que celui des données imaginaires est représenté par des traits en pointillés.

Les données $d_i^r[n]$ ainsi obtenues sont ensuite fournies à un module de post-traitement 190, effectuant le traitement inverse de celui du module 110, autrement dit une démodulation OQAM. Les symboles QAM sont ainsi restaurés.

La technologie FBMC est l'une des technologies candidates à la cinquième génération des systèmes de télécommunication sans fil. En particulier, celle-ci devrait permettre de répondre aux besoins de fragmentation spectrale et d'asynchronisme de transmission des communications de type machine ou MTC (Machine Type Communication).

L'application de la technologie FBMC aux systèmes de télécommunication à diversité spatiale de type MIMO (Multiple Input Multiple Output) est toutefois beaucoup plus compliquée qu'en OFDM du fait que la transmission FBMC utilise intrinsèquement l'orthogonalité dans le plan complexe pour éliminer l'interférence entre symboles FBMC.

Un codage spatio-temporel par bloc ou STBC (Spatial Time Block Coding) de type Alamouti a été récemment proposé pour un système FBMC dans l'article de M. Renfors et al. intitulé « A block-Alamouti scheme for filter bank based multicarrier transmission » publié dans Proceedings of European Wireless Conférence EW 2010, Avril 12-15, 2010, Lucca, Italie. 2010. pp. 1031-1037.

On rappelle tout d'abord qu'un codage Alamouti est un codage STBC (Space Time Block Coding) s'appliquant à une configuration à deux antennes d'émission et une antenne de réception. Sa matrice de codage est donnée par :

$$\mathbf{C} = \begin{pmatrix} x_0 & x_1 \\ -x_1^* & x_0^* \end{pmatrix} \qquad (3)$$

dans laquelle $x_0$ et $x_1$ sont deux symboles complexes (appartenant à un alphabet de modulation) à transmettre. Lors d'une première utilisation du canal (c'est-à-dire un premier intervalle de transmission) les antennes d'émission transmettent respectivement $x_0$ et $x_1$, et, lors d'une seconde utilisation du canal, ces antennes transmettent $-x_1^*$ et $x_0^*$.

Les signaux reçus respectivement pendant la première et la seconde utilisation du canal, $y_0$, $y_1$ peuvent alors s'exprimer sous la forme :

$$y_0 = h_0 x_0 + h_1 x_1 + n_0 \qquad (4\text{-}1)$$

$$y_1 = -h_0 x_1^* + h_1 x_0^* + n_1 \qquad (4\text{-}2)$$

où $h_0, h_1$ sont respectivement le coefficient complexe du premier canal élémentaire entre la première antenne d'émission et l'antenne de réception, et le coefficient complexe du second canal élémentaire entre la seconde antenne d'émission et l'antenne de réception, et où $n_0, n_1$ sont des échantillons de bruit supposés additifs, indépendants et issus d'un même processus gaussien blanc centré.

En supposant le canal connu, le récepteur estime les symboles transmis à partir d'une combinaison des signaux reçus :

$$\hat{x}_0 = \frac{1}{|h_0|^2 + |h_1|^2} \left( h_0^* y_0 + h_1 y_1^* \right) = x_0 + \frac{h_0^* n_0 + h_1 n_1^*}{|h_0|^2 + |h_1|^2} \qquad (5\text{-}1)$$

$$\hat{x}_1 = \frac{1}{|h_0|^2 + |h_1|^2} \left( h_1^* y_0 - h_0 y_1^* \right) = x_1 + \frac{h_1^* n_0 - h_0 n_1^*}{|h_0|^2 + |h_1|^2} \qquad (5\text{-}2)$$

L'article de Renfors précité fait appel à une technique de filtrage adapté, déjà utilisée pour le codage d'Alamouti en présence d'interférence intersymbole, présentée dans l'article de E. Lindskog *et al.* intitulé « A transmit scheme for channels with intersymbol interference » publié dans Proc. IEEE of Int'l Conf. on Communications, ICC 2000, pp.307-311, Juin 2000.

Le codage d'Alamouti est effectué par blocs de vecteurs de données d'entrée, un bloc étant constitué d'une séquence de $L$ vecteurs-colonnes et pouvant donc être représenté par une matrice $\overline{\mathbf{X}}$ de taille $N \times L$ où $N$ est le nombre de sous-porteuses. Chaque vecteur-colonne de la matrice $\overline{\mathbf{X}}$, soit $\mathbf{X}^m$, $m = 0,...,L\text{-}1$, représente ici un vecteur de symboles complexes en sortie du modulateur OQAM. On rappelle qu'en raison de la modulation OQAM, deux éléments adjacents quelconques (selon les lignes ou les colonnes) de la matrice $\overline{\mathbf{X}}$ sont l'un réel et l'autre imaginaire.

Si l'on note $\overline{\mathbf{X}}_0$ et $\overline{\mathbf{X}}_1$ deux blocs consécutifs, la matrice de codage d'Alamouti par blocs, telle que proposée dans l'article de Renfors peut s'exprimer sous la forme :

$$\overline{\mathbf{C}} = \begin{pmatrix} \overline{\mathbf{X}}_0 & \overline{\mathbf{X}}_1 \\ -\overline{\mathbf{X}}_1^* \mathbf{T} & \overline{\mathbf{X}}_0^* \mathbf{T} \end{pmatrix} \qquad (6)$$

Les colonnes-bloc de la matrice-bloc représentent ici les antennes et les lignes-bloc représentent les utilisations du canal. Dans chacun des blocs, les lignes représentent les sous-porteuses et les colonnes représentent le temps. $\mathbf{T}$ est une matrice anti-diagonale de taille $L \times L$ dont tous les éléments anti-diagonaux sont égaux à 1, et traduit ainsi un retournement temporel. Ainsi, si $\overline{\mathbf{X}}$ est une séquence de vecteurs $\mathbf{X}^0, \mathbf{X}^1,...,\mathbf{X}^{L\text{-}1}$ le bloc $\mathbf{XT}$ est constitué de la séquence $\mathbf{X}^{L\text{-}1}, \mathbf{X}^{L\text{-}2},...,\mathbf{X}^0$.

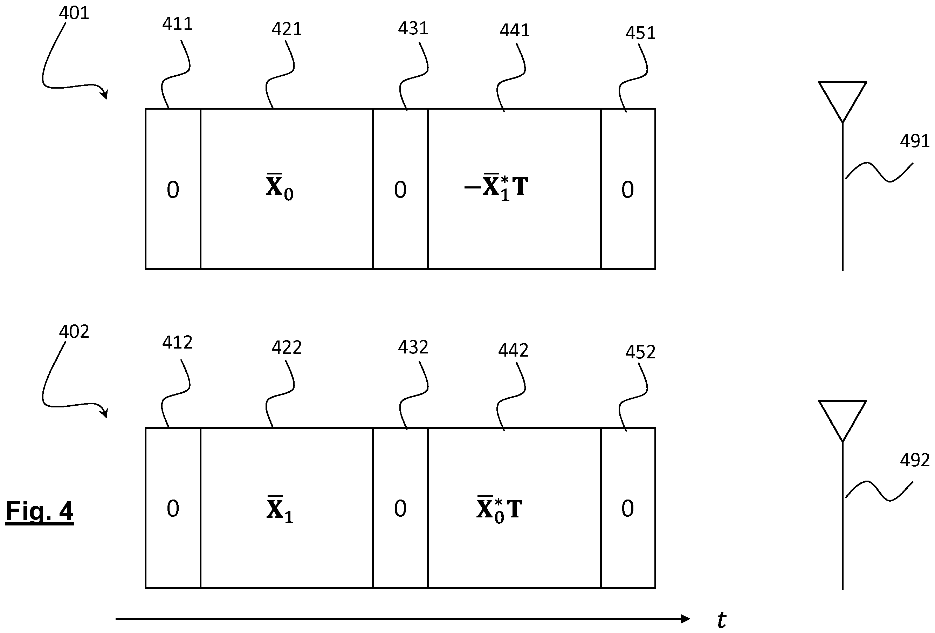

La Fig. 4 représente de manière schématique une séquence de blocs de symboles émis par un émetteur FBMC avec un codage d'Alamouti par blocs.

Une première séquence de blocs, 401, est formée par un premier bloc de garde 411, un premier bloc de L vecteurs de symboles, $\overline{\mathbf{X}}_0$, 421, un second bloc de garde, 431, un premier bloc transformé, $-\overline{\mathbf{X}}_1^* \mathbf{T}$, 441, constitué de L vecteurs de symboles, suivi par un troisième bloc de garde 451.

Une seconde séquence de blocs, 402, est formée par un premier bloc de garde, 421, un second bloc constitué de L vecteurs de symboles, $\overline{\mathbf{X}}_1$, 422, un second bloc de garde, 432, un second bloc transformé $\overline{\mathbf{X}}_0^* \mathbf{T}$, 442, constitué de L vecteurs de symboles, suivi d'un troisième bloc de garde, 452.

Les blocs de garde sont constitués de symboles nuls et ont pour objet d'isoler les blocs successifs de l'interférence générée par les blocs adjacents.

La première séquence de blocs est transmise par la première antenne 491 après modulation FBMC. Le signal obtenu en sortie du modulateur FBMC peut être considéré comme une séquence de symboles FBMC se chevauchant temporellement, comme expliqué en relation avec la Fig. 3. Le signal ainsi obtenu est transmis sur la première antenne après avoir été translaté en bande RF.

De même, la seconde séquence de blocs est transmise par la seconde antenne 492 après avoir été modulée par un second modulateur FBMC de structure identique au premier.

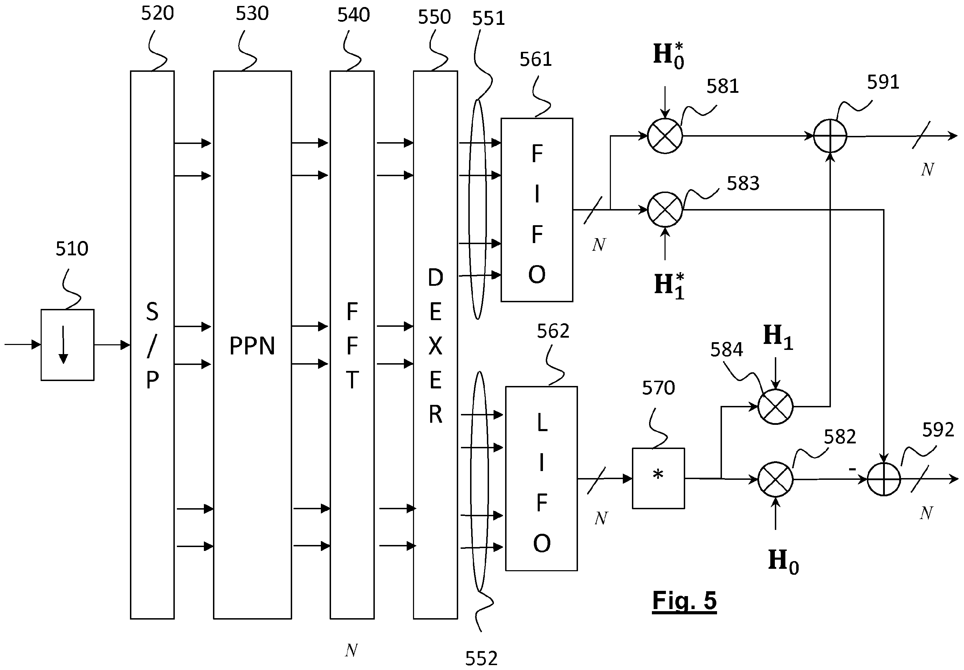

La Fig. 5 représente schématiquement l'architecture d'un récepteur FBMC permettant de recevoir les séquences de blocs de symboles émises par l'émetteur de la Fig. 4. Il est essentiel de noter que ce récepteur FBMC présente une architecture classique (implémentation temporelle) et non une architecture FS-FBMC (implémentation fréquentielle).

Le récepteur comprend un module d'échantillonnage 510 pour échantillonner le signal reçu en bande de base à la cadence $Nf$ où $N$ est le nombre de sous-porteuses et $f$ est la fréquence des symboles FBMC. Les échantillons sont regroupés sous forme de blocs de taille $N$ par un convertisseur série-parallèle 520.

Chaque bloc est filtré par un transmultiplexeur constitué par une batterie de $N$ filtres polyphasés (PPN), 530, puis soumis une FFT de taille $N$, dans le module de FFT 540, opérant sur les N sorties de ces filtres.

Le récepteur est supposé être synchronisé sur les symboles FBMC, autrement dit le début d'une fenêtre FFT coïncide avec le premier échantillon d'un symbole FBMC (émis par l'une ou l'autre des antennes d'émission). En outre le récepteur est supposé être synchronisé sur les instants d'utilisation du canal de sorte qu'il connaît les instants de réception des premier et second blocs

Un démultiplexeur 550 fournit les vecteurs en sortie de la FFT sur une première sortie 551 lors de la première utilisation du canal et sur une seconde sortie 552 lors de la seconde utilisation du canal. Les L vecteurs (de taille $N$) générés séquentiellement sur la première sortie sont stockés dans une première mémoire tampon 561 configurée sous la forme d'un buffer FIFO (*First In First Out*). Les L vecteurs générés séquentiellement sur la seconde sortie sont également stockés dans une seconde mémoire tampon 562, configurée sous la forme d'un buffer LIFO (*Last In First Out*). Le module de conjugaison 570 lit ainsi les L vecteurs dans l'ordre inverse de leur ordre de stockage, de sorte à effectuer un retournement temporel, et effectue une conjugaison complexe de chacun de ces vecteurs.

Chaque élément d'un vecteur généré sur la première sortie est multiplié en 581 par le conjugué complexe du coefficient du premier canal élémentaire entre la première antenne d'émission et l'antenne de réception, à la fréquence de la sous-porteuse portant l'élément en question (l'opération est symbolisée ici par une multiplication du vecteur en sortie de la mémoire tampon par la matrice $\mathbf{H}_0^*$ définie ci-après) et en 583 par le conjugué complexe du coefficient du second canal élémentaire entre la seconde antenne d'émission et l'antenne de réception, à la même fréquence de sous-porteuse (l'opération est symbolisée ici par une multiplication du vecteur d'échantillons en sortie de FFT par la matrice $\mathbf{H}_1^*$). Il est entendu que les matrices $\mathbf{H}_0$ et $\mathbf{H}_1$ sont ici de taille $N \times N$ et représentent ici les coefficients des canaux élémentaires pour les N sous porteuses. Les matrices $\mathbf{H}_0$ et $\mathbf{H}_1$ sont diagonales. On suppose les matrices $\mathbf{H}_0$ et $\mathbf{H}_1$ constantes sur la durée de la séquence (hypothèse de *flat fading* dans le temps).

De manière similaire, chaque élément d'un vecteur généré sur la seconde sortie, est multiplié en 582 par le coefficient du canal entre la première antenne d'émission et l'antenne de réception à la fréquence de la sous-porteuse portant l'élément en question (opération symbolisée par une multiplication du vecteur en sortie de la FFT par la matrice $\mathbf{H}_0$) et en 584 par le coefficient du canal entre la seconde antenne d'émission et l'antenne de réception à la fréquence de la même sous-porteuse (opération symbolisée par une multiplication du vecteur en sortie de la FFT par la matrice $\mathbf{H}_1$).

Les vecteurs en sortie du multiplieur 581 sont sommés, élément à élément, avec ceux en sortie du multiplieur 584, dans le sommateur, 591. Les vecteurs successifs en sortie du sommateur 591 sont ensuite fournis à un premier démodulateur OQAM (non représenté).

De manière similaire, les vecteurs en sortie du multiplieur 583 sont soustraits, élément à élément, à ceux en sortie du multiplieur 582, dans le sommateur 592. Les vecteurs successifs en sortie du sommateur 592 sont ensuite fournis à un second démodulateur OQAM (non représenté).

Autrement dit, si l'on note $\overline{\mathbf{Y}}_0$ et $\overline{\mathbf{Y}}_1$ les matrices de taille $N \times L$ représentant la séquence de L vecteurs-colonne en sortie de la FFT, respectivement lors de la première et de la seconde utilisation du canal, les estimations des vecteurs de symboles $\overline{\mathbf{X}}_0$ et $\overline{\mathbf{X}}_1$ sont obtenues par :

$$\widehat{\overline{\mathbf{X}}}_0 = \frac{1}{Tr\left(\mathbf{H}_0^*\mathbf{H}_0 + \mathbf{H}_1^*\mathbf{H}_1\right)}\left(\mathbf{H}_0^*\overline{\mathbf{Y}}_0 + \mathbf{H}_1\overline{\mathbf{Y}}_1^*\mathbf{T}\right) \tag{7-1}$$

$$\widehat{\overline{\mathbf{X}}}_1 = \frac{1}{Tr\left(\mathbf{H}_0^*\mathbf{H}_0 + \mathbf{H}_1^*\mathbf{H}_1\right)}\left(\mathbf{H}_1^*\overline{\mathbf{Y}}_0 - \mathbf{H}_0\overline{\mathbf{Y}}_1^*\mathbf{T}\right) \tag{7-2}$$

La méthode de réception décrite ci-dessus fonctionne pour un récepteur FBMC implémenté au moyen d'une batterie de filtres polyphasés. Elle n'est pas applicable à un récepteur FS-FBMC comme décrit en relation avec la partie droite de la Fig. 1, étant donné que le filtrage se fait alors en aval de la FFT.

Le but de la présente invention est par conséquent de proposer une méthode de réception d'une séquence de blocs de symboles FBMC codée au moyen d'un codage Alamouti par blocs, qui fonctionne pour un récepteur FS-FBMC. La présente invention concerne également un récepteur FS-FBMC adapté à mettre en œuvre cette méthode de réception.

## EXPOSÉ DE L'INVENTION

La présente invention est définie par une méthode de réception de signaux transmis par un émetteur FBMC utilisant un codage Alamouti par blocs, l'émetteur FBMC utilisant une pluralité $N$ de sous-porteuses et un facteur de chevauchement $K$ de filtres prototypes, le signal reçu par le récepteur étant translaté en bande de base, échantillonné à la fréquence $Nf$ où $f$ est la demie-fréquence des symboles FBMC, puis soumis à une FFT glissante de taille $KN$ pour fournir des vecteurs d'échantillons, dans laquelle lesdits vecteurs d'échantillons sont reçus sur une première voie pendant une première utilisation de canal et sur une seconde voie pendant une seconde utilisation de canal, le canal comprenant un premier canal élémentaire entre une première antenne de l'émetteur et une première antenne du récepteur et un second canal élémentaire entre une seconde antenne de l'émetteur et une seconde antenne du récepteur, lesdits premier et second canaux élémentaires étant respectivement caractérisés par une première et une seconde matrice de transfert $(\mathbf{H}_0,\mathbf{H}_1)$, chaque vecteur $(\mathbf{W}_0^m)$ d'une séquence de vecteurs reçus sur la première voie étant multiplié par le conjugué de la première matrice de transfert pour fournir un premier vecteur et par le conjugué de la seconde matrice de transfert pour fournir un second vecteur, une séquence de vecteurs reçus sur la seconde voie étant retournée temporellement et chaque vecteur $(\mathbf{W}_1^{L-1-m})$ de la seconde séquence étant conjugué avant d'être multiplié par la première matrice de transfert pour fournir un troisième vecteur et par la seconde matrice de transfert pour fournir un quatrième vecteur, les premier et quatrième vecteurs étant combinés pour fournir un premier vecteur combiné, les second et troisième vecteurs étant combinés pour fournir un second vecteur combiné, les premier et second vecteurs combinés étant spectralement désétalés et filtrés dans le domaine fréquentiel par les filtres prototypes pour fournir respectivement une estimation d'un premier vecteur de données $(\hat{\mathbf{X}}_0^m)$ émis via la première antenne de l'émetteur et d'un second vecteur de données $(\hat{\mathbf{X}}_1^m)$ émis via la seconde antenne de l'émetteur.

Selon une première variante, les première et seconde antennes du récepteur forment une seule antenne, et que lesdits vecteurs d'échantillons sont démultiplexés sur la première voie pendant la première utilisation du canal et sur la seconde voie pendant la seconde utilisation du canal.

Selon une seconde variante, les première et seconde antennes sont distinctes, la première voie étant associée à la première antenne du récepteur et la seconde voie étant associée à la seconde antenne du récepteur.

Avantageusement, si l'émetteur utilise comme matrice de codage d'Alamouti par blocs la matrice :

$$\overline{\mathbf{C}} = \begin{pmatrix} \overline{\mathbf{X}}_0 & \overline{\mathbf{X}}_1 \\ -\overline{\mathbf{X}}_1\mathbf{T} & \overline{\mathbf{X}}_0\mathbf{T} \end{pmatrix}$$

où $\overline{\mathbf{X}}_0$ et $\overline{\mathbf{X}}_1$ sont des premier et second blocs de vecteurs de données d'entrée transmis pendant la première utilisation du canal respectivement via la première antenne et la seconde antenne de l'émetteur, $\overline{\mathbf{X}}_1\mathbf{T}$ est un premier bloc transformé obtenu par retournement temporel et du second bloc, $\overline{\mathbf{X}}_0\mathbf{T}$ est un second bloc transformé obtenu par retournement temporel du premier bloc, les blocs $-\overline{\mathbf{X}}_1\mathbf{T}$ et $\overline{\mathbf{X}_0}\mathbf{T}$ étant transmis pendant la seconde utilisation du canal respectivement via la première antenne et la seconde antenne de l'émetteur, selon un premier mode de réalisation, les vecteurs de la seconde séquence sont multipliés par un facteur ($j^{L-1}$) où $L$ est la taille des premier et second blocs de vecteurs de données d'entrée, après conjugaison et avant multiplication par les première et seconde matrices de transfert.

Dans ce cas, le vecteur de données d'entrée de rang m dans le premier bloc de vecteurs de données d'entrée, $\mathbf{X}_0^m$, et le vecteur de données d'entrée de rang m dans le second bloc de vecteurs de données d'entrée, $\mathbf{X}_1^m$, peuvent alors estimés par :

$$\hat{\mathbf{X}}_0^m = \mu\mathbf{G}\left(\mathbf{H}_0^*\mathbf{W}_0^m + j^{L-1}\mathbf{H}_1\mathbf{W}_1^{L-1-m*}\right) \odot \mathbf{M}^{m*}$$

$$\hat{\mathbf{X}}_1^m = \mu\mathbf{G}\left(\mathbf{H}_1^*\mathbf{W}_0^m - j^{L-1}\mathbf{H}_0\mathbf{W}_1^{L-1-m*}\right) \odot \mathbf{M}^{m*}$$

où $\hat{\mathbf{X}}_0^m$ et $\hat{\mathbf{X}}_1^m$ sont respectivement les estimés des vecteurs $\mathbf{X}_0^m$ et $\mathbf{X}_1^m$, $\mathbf{H}_0, \mathbf{H}_1$ sont respectivement les première et seconde matrices de transfert, $\mathbf{W}_0^m$ le vecteur de rang m reçu sur la première voie, $\mathbf{W}_1^{L-1-m}$ le vecteur de rang $L\text{-}1\text{-}m$ reçu sur la seconde voie, $\mathbf{M}^m$ un vecteur représentant un codage OQAM des vecteurs $\mathbf{X}_0^m$ et $\mathbf{X}_1^m$, G une matrice représentant, dans le domaine fréquentiel, un désétalement spectral et un filtrage par les filtres prototypes, $\mu$ est un coefficient de normalisation et $\odot$ représente le produit de Hadamard.

Alternativement, si l'émetteur utilise comme matrice de codage d'Alamouti par blocs la matrice :

$$\overline{\mathbf{C}}' = \begin{pmatrix} \overline{\mathbf{X}}_0 & \overline{\mathbf{X}}_1 \\ -\left(j^{L-1}\right)\overline{\mathbf{X}}_1\mathbf{T} & \left(j^{L-1}\right)\overline{\mathbf{X}}_0\mathbf{T} \end{pmatrix}$$

où $\overline{\mathbf{X}}_0$ et $\overline{\mathbf{X}}_1$ sont des premier et second blocs de vecteurs de données d'entrée transmis pendant la première utilisation du canal respectivement via la première antenne et la seconde antenne de l'émetteur, $\overline{\mathbf{X}}_1\mathbf{T}$ est un premier bloc transformé obtenu par retournement temporel et du second bloc, $\overline{\mathbf{X}}_0\mathbf{T}$ est un second bloc transformé obtenu par retournement temporel du premier bloc, selon un second mode de réalisation de l'invention, les vecteurs de la seconde séquence, après conjugaison, sont directement multipliés par les première et seconde matrices de transfert.

Dans ce cas, le vecteur de données d'entrée de rang m dans le premier bloc de vecteurs de données d'entrée, $\mathbf{X}_0^m$, et le vecteur de données d'entrée de rang m dans le second bloc de vecteurs de données d'entrée, $\mathbf{X}_1^m$, sont estimés par :

$$\hat{\mathbf{X}}_0^m = \mu\mathbf{G}\left(\mathbf{H}_0^*\mathbf{W}_0^m + \mathbf{H}_1\mathbf{W}_1^{L-1-m*}\right) \odot \mathbf{M}^{m*}$$

$$\hat{\mathbf{X}}_1^m = \mu\mathbf{G}\left(\mathbf{H}_1^*\mathbf{W}_0^m - \mathbf{H}_0\mathbf{W}_1^{L-1-m*}\right) \odot \mathbf{M}^{m*}$$

où $\hat{\mathbf{X}}_0^m$ et $\hat{\mathbf{X}}_1^m$ sont respectivement les estimés des vecteurs $\mathbf{X}_0^m$ et $\mathbf{X}_1^m$, $\mathbf{H}_0, \mathbf{H}_1$ sont respectivement les première et seconde matrices de transfert, $\mathbf{W}_0^m$ le vecteur de rang m reçu sur la première voie, $\mathbf{W}_1^{L-1-m}$ le vecteur de rang *L-1-m* reçu sur la seconde voie, $\mathbf{M}^m$ un vecteur représentant un codage OQAM des vecteurs $\mathbf{X}_0^m$ et $\mathbf{X}_1^m$, G une matrice représentant, dans le domaine fréquentiel, un désétalement spectral et un filtrage par les filtres prototypes, $\mu$ est un coefficient de normalisation et $\odot$ représente le produit de Hadamard.

Dans les deux cas précédents, les premier et second blocs de vecteurs de données d'entrée peuvent être précédés respectivement d'un premier et d'un second préambules, un premier bloc de garde constitué de vecteurs nuls séparant le premier bloc de vecteurs de données et le premier bloc transformé, un second bloc de garde constitué de vecteurs nuls séparant le second bloc de vecteurs de données et le second bloc transformé. Les premier et second préambules étant connus du récepteur on effectue avantageusement sur la première voie, en sortie de la FFT glissante, une élimination de l'interférence affectant les vecteurs reçus sur la première voie par soustraction à cette voie de la contribution due aux premier et second préambules.

## BRÈVE DESCRIPTION DES DESSINS

D'autres caractéristiques et avantages de l'invention apparaîtront à la lecture de modes de réalisation préférentiels de l'invention faite en référence aux figures jointes parmi lesquelles :

La Fig. 1 représente de manière schématique un système de télécommunication FS-FBMC connu de l'état de la technique ;

La Fig. 2A illustre l'étalement spectral réalisé en amont du module IFFT de la Fig. 1 ;

La Fig. 2B illustre le désétalement spectral réalisé en aval du module FFT dans la Fig. 1 ;

La Fig. 3 illustre la combinaison des symboles FBMC dans la Fig. 1;

La Fig. 4 représente schématiquement l'émission de deux séquences de blocs de symboles par un émetteur FBMC utilisant un codage d'Alamouti par blocs connu de l'état de la technique ;

La Fig. 5 représente schématiquement l'architecture d'un récepteur FBMC permettant de recevoir les séquences de blocs de symboles émises par l'émetteur de la Fig. 4;

La Fig. 6 représente schématiquement l'architecture d'un récepteur FS-FBMC, selon un premier mode de réalisation de l'invention, permettant de recevoir des séquences de blocs de symboles codés par un codage d'Alamouti par blocs;

La Fig. 7 représente schématiquement l'architecture d'un récepteur FS-FBMC selon une variante du premier mode de réalisation de l'invention.

La Fig. 8A représente schématiquement un premier exemple d'émission de deux séquences de blocs de symboles par un émetteur FBMC utilisant un premier codage d'Alamouti par blocs;

La Fig. 8B représente schématiquement un second exemple d'émission de deux séquences de blocs de symboles par un émetteur FBMC utilisant un second codage d'Alamouti par blocs;

La Fig. 9 représente schématiquement l'architecture d'un récepteur FS-FBMC, selon un second mode de réalisation de l'invention, permettant de recevoir des séquences de blocs émises selon le schéma de la Fig. 8B.

## EXPOSÉ DÉTAILLÉ DE MODES DE RÉALISATION PARTICULIERS

Pour faciliter la compréhension des notations, nous considérerons d'abord un émetteur FS-FBMC, tel que décrit en relation avec la Fig. 1.

A la différence des notations précédentes, les vecteurs-colonnes $\mathbf{X}^m$, *m* = 0,...,*L*-1, de taille N, représenteront dans la suite des vecteurs de données d'entrée, autrement dit des données à l'entrée du modulateur OQAM. Les éléments de ces vecteurs sont donc à valeurs réelles.

Le signal émis par l'émetteur à l'instant m peut être représenté par un vecteur-colonne $\mathbf{Z}^m$ de taille *KN* dont les éléments sont des échantillons à la fréquence *Nf* . Le vecteur $\mathbf{Z}^m$ peut s'exprimer en fonction des vecteurs $\mathbf{X}^{m-(K-1)},...,\mathbf{X}^m,...,\mathbf{X}^{m+(K-1)}$ de données d'entrée, soit :

$$\mathbf{Z}^m = \mathbf{F}^H \mathbf{G} \left( \mathbf{X}^m \odot \mathbf{M}^m \right) + \sum_{p=1}^{K-1} \mathbf{Q}_{\frac{pN}{2}} \mathbf{F}^H \mathbf{G} \left( \mathbf{X}^{m-p} \odot \mathbf{M}^{m-p} \right) + \mathbf{Q}_{KN-\frac{pN}{2}} \mathbf{F}^H \mathbf{G} \left( \mathbf{X}^{m+p} \odot \mathbf{M}^{m+p} \right)$$

$$(8)$$

où $\odot$ est le produit de Hadamard, **F** est la matrice de transformée de Fourier discrète de taille *KN*×*KN*, **G** est une matrice de taille *KN*×*N* représentant l'étalement spectral et la fonction de transfert du filtre prototype dans le domaine fréquentiel,

soit :

$$\mathbf{G} = \begin{pmatrix} G_{K-1} & 0 & \cdots & 0 \\ \vdots & G_{K-1} & \ddots & \vdots \\ G_0 & \vdots & \ddots & 0 \\ \vdots & G_0 & \ddots & G_{K-1} \\ G_{-K+1} & \vdots & \ddots & \vdots \\ 0 & G_{-K+1} & \ddots & G_0 \\ \vdots & \ddots & \ddots & \vdots \\ 0 & \cdots & 0 & G_{-K+1} \end{pmatrix} \tag{9}$$

$\mathbf{M}^m$ est un vecteur-colonne de taille N qui traduit la modulation OQAM, à savoir un vecteur dont les éléments sont donnés par :

$$M^m[k] = j^{m+k}(-1)^{km} \tag{10}$$

et $\mathbf{Q}_\ell$ est une matrice de décalage de $\ell$ échantillons, de taille $KNxKN$ définie par :

$$\mathbf{Q}_\ell = \begin{pmatrix} \mathbf{0}_{\ell \times (KN-\ell)} & \mathbf{0}_{\ell \times \ell} \\ \mathbf{I}_{KN-\ell} & \mathbf{0}_{(KN-\ell) \times \ell} \end{pmatrix} \tag{11}$$

où $\mathbf{I}_{KN-\ell}$ est la matrice identité de taille $(KN-\ell) \times (KN-\ell)$

On comprendra que les termes sous le signe somme dans l'expression (8) représentent les $2K$-1 symboles FBMC qui sont combinés en Fig. 3.

Le signal reçu par le récepteur FBMC à l'instant m peut de manière similaire s'exprimer sous la forme d'un vecteur de données en sortie du démodulateur OQAM, noté ici $\mathbf{Y}^m$, de taille $KN$. Le vecteur $\mathbf{Y}^m$ peut s'exprimer en fonction du vecteur $Z^m$ représentant le signal émis, soit en faisant abstraction du terme de bruit:

$$\mathbf{Y}^m = \left( \mathbf{G}^H \mathbf{F} \mathbf{H}_0 \mathbf{Z}^m \right) \odot \mathbf{M}^{m*} \tag{12}$$

soit encore, compte tenu du fait que $\mathbf{G}^H \mathbf{F} \mathbf{F}^H \mathbf{G} = \mathbf{I}_N$ et que $(\mathbf{X}^m \odot \mathbf{M}^m) \odot \mathbf{M}^{m*} = \mathbf{X}^m$ :

$$\mathbf{Y}^m = \mathbf{H}_0 \left( \mathbf{X}^m + \sum_{p=1}^{K-1} \mathbf{U}^p \left( \mathbf{X}^{m-p} \odot \mathbf{M}^{m-p} \right) \odot \mathbf{M}^{m*} + \sum_{p=1}^{K-1} \mathbf{V}^p \left( \mathbf{X}^{m+p} \odot \mathbf{M}^{m+p} \right) \odot \mathbf{M}^{m*} \right) \tag{13}$$

avec :

$$\mathbf{U}^p = \mathbf{G}^H \mathbf{F} \mathbf{Q}^{\frac{pN}{2}} \mathbf{F}^H \mathbf{G} \quad \text{et} \quad \mathbf{V}^p = \mathbf{G}^H \mathbf{F} \mathbf{Q}^{KN-\frac{pN}{2}} \mathbf{F}^H \mathbf{G} \tag{14}$$

On notera que $\mathbf{G}^H = \mathbf{G}^T$ étant donné que les coefficients de la matrice de transfert du filtre sont réels.

On suppose maintenant que l'on effectue un codage d'Alamouti par blocs, avec une matrice de codage définie par :

$$\overline{\mathbf{C}} = \begin{pmatrix} \overline{\mathbf{X}}_0 & \overline{\mathbf{X}}_1 \\ -\overline{\mathbf{X}}_1\mathbf{T} & \overline{\mathbf{X}}_0\mathbf{T} \end{pmatrix} \qquad (15)$$

L'idée à la base de l'invention est d'utiliser un récepteur implémenté dans le domaine fréquentiel (récepteur FS-FBMC) et de combiner les deux blocs en sortie du module de FFT (module 170 de la Fig. 1), respectivement lors de la première et de la seconde utilisation du canal.

On note $\mathbf{X}_0^m$ le $m$ ème vecteur de données d'entrée du premier bloc $\overline{\mathbf{X}}_0$ et $\mathbf{X}_1^m$ le $m$ ème vecteur de données d'entrée du second bloc $\overline{\mathbf{X}}_1$. On note par ailleurs $\mathbf{W}_0^m$ le $m$ ème vecteur d'échantillons en sortie du module de FFT, avant désétalement et filtrage, lors de la première utilisation du canal. De manière similaire, on note $\mathbf{W}_1^m$ le $m$ ème vecteur d'échantillons en sortie du module de FFT, avant désétalement et filtrage, lors de la seconde utilisation du canal.

Lors de la première utilisation du canal, le vecteur $\mathbf{W}_0^m$ peut s'exprimer comme suit :

$$\mathbf{W}_0^m = \mathbf{H}_0 \left( \mathbf{G}\left(\mathbf{X}_0^m \odot \mathbf{M}^m\right) + \sum_{p=1}^{K-1} \mathbf{A}^p\left(\mathbf{X}_0^{m-p} \odot \mathbf{M}^{m-p}\right) + \sum_{p=1}^{K-1} \mathbf{B}^p\left(\mathbf{X}_0^{m+p} \odot \mathbf{M}^{m+p}\right) \right) +$$
$$\mathbf{H}_1 \left( \mathbf{G}\left(\mathbf{X}_1^m \odot \mathbf{M}^m\right) + \sum_{p=1}^{K-1} \mathbf{A}^p\left(\mathbf{X}_1^{m-p} \odot \mathbf{M}^{m-p}\right) + \sum_{p=1}^{K-1} \mathbf{B}^p\left(\mathbf{X}_1^{m+p} \odot \mathbf{M}^{m+p}\right) \right)$$

$$(16)$$

avec

$$\mathbf{A}^p = \mathbf{F}\mathbf{Q}^{\frac{pN}{2}}\mathbf{F}^H \ \text{ et } \ \mathbf{B}^p = \mathbf{F}\mathbf{Q}^{KN-\frac{pN}{2}}\mathbf{F}^H . \qquad (17)$$

De même, lors de la seconde utilisation du canal, le vecteur $\mathbf{W}_1^m$ peut s'exprimer comme suit :

$$\mathbf{W}_1^m = -\mathbf{H}_0 \left( \mathbf{G}\left(\mathbf{X}_1^{L-1-m} \odot \mathbf{M}^m\right) + \sum_{p=1}^{K-1} \mathbf{A}^p\left(\mathbf{X}_1^{L-1-m+p} \odot \mathbf{M}^{m-p}\right) + \sum_{p=1}^{K-1} \mathbf{B}^p\left(\mathbf{X}_1^{L-1-m-p} \odot \mathbf{M}^{m+p}\right) \right) +$$
$$\mathbf{H}_1 \left( \mathbf{G}\left(\mathbf{X}_0^{L-1-m} \odot \mathbf{M}^m\right) + \sum_{p=1}^{K-1} \mathbf{A}^p\left(\mathbf{X}_0^{L-1-m+p} \odot \mathbf{M}^{m-p}\right) + \sum_{p=1}^{K-1} \mathbf{B}^p\left(\mathbf{X}_0^{L-1-m-p} \odot \mathbf{M}^{m+p}\right) \right)$$

$$(18)$$

expression dans laquelle on a tiré parti du fait que les vecteurs de données d'entrée étaient à valeurs réelles. On notera que les matrices de transfert des canaux élémentaires, $\mathbf{H}_0$ et $\mathbf{H}_1$ sont ici de taille *KNxKN* en raison de l'étalement spectral.

Si l'on transforme le bloc de vecteurs $\mathbf{W}_1^m$, $m = 0,...,L$-1, par retournement temporel et conjugaison complexe du bloc, le $m$ ème vecteur du bloc ainsi transformé peut s'écrire, à partir de (18) :

$$\mathbf{W}_1^{L-m-1*} = -\mathbf{H}_0^* \left( \mathbf{G}\left(\mathbf{X}_1^m \odot \mathbf{M}^{L-1-m*}\right) + \sum_{p=1}^{K-1} \mathbf{A}^{p*}\left(\mathbf{X}_1^{m+p} \odot \mathbf{M}^{L-1-m-p*}\right) + \sum_{p=1}^{K-1} \mathbf{B}^{p*}\left(\mathbf{X}_1^{m-p} \odot \mathbf{M}^{L-1-m+p*}\right)\right) +$$

$$\mathbf{H}_1^* \left( \mathbf{G}\left(\mathbf{X}_0^m \odot \mathbf{M}^{L-1-m*}\right) + \sum_{p=1}^{K-1} \mathbf{A}^{p*}\left(\mathbf{X}_0^{m+p} \odot \mathbf{M}^{L-1-m-p*}\right) + \sum_{p=1}^{K-1} \mathbf{B}^{p*}\left(\mathbf{X}_0^{m-p} \odot \mathbf{M}^{L-1-m+p*}\right)\right)$$

$$(19)$$

Soit en tenant compte du fait que :

$$\mathbf{M}^{L-1-m*} = -\mathbf{M}^m j^{L-1} \ ; \ \mathbf{M}^{L-1-m-p*} = -\mathbf{M}^{m+p} j^{L-1} \ ; \ \mathbf{M}^{L-1-m+p*} = -\mathbf{M}^{m-p} j^{L-1}$$

où l'on a supposé que la taille L du bloc était un nombre pair, et que :

$$\mathbf{A}^{p*} = \mathbf{B}^p \ ; \ \mathbf{B}^{p*} = \mathbf{A}^p$$

le vecteur $\mathbf{W}_1^{L-m-1*}$ du bloc retourné peut finalement s'écrire :

$$\mathbf{W}_1^{L-m-1*} = \mathbf{H}_0^* j^{L-1} \left( \mathbf{G}\left(\mathbf{X}_1^m \odot \mathbf{M}^m\right) + \sum_{p=1}^{K-1} \mathbf{B}^p\left(\mathbf{X}_1^{m+p} \odot \mathbf{M}^{m+p}\right) + \sum_{p=1}^{K-1} \mathbf{A}^p\left(\mathbf{X}_1^{m-p} \odot \mathbf{M}^{m-p}\right)\right) -$$

$$\mathbf{H}_1^* j^{L-1} \left( \mathbf{G}\left(\mathbf{X}_0^m \odot \mathbf{M}^m\right) + \sum_{p=1}^{K-1} \mathbf{B}^p\left(\mathbf{X}_0^{m+p} \odot \mathbf{M}^{m+p}\right) + \sum_{p=1}^{K-1} \mathbf{B}^{p*}\left(\mathbf{X}_0^{m-p} \odot \mathbf{M}^{m-p}\right)\right)$$

$$(20)$$

On peut alors estimer les vecteurs de données transmis $\mathbf{X}_0^m$, $\mathbf{X}_1^m$ en effectuant une combinaison des vecteurs $\mathbf{W}_0^m$ et $\mathbf{W}_1^{L-m-1*}$ :

$$\breve{\mathbf{X}}_0^m = \mu\left(\mathbf{H}_0^* \mathbf{W}_0^m + j^{L-1}\mathbf{H}_1 \mathbf{W}_1^{L-1-m*}\right) \tag{21-1}$$

$$\breve{\mathbf{X}}_1^m = \mu\left(\mathbf{H}_1^* \mathbf{W}_0^m - j^{L-1}\mathbf{H}_0 \mathbf{W}_1^{L-1-m*}\right) \tag{21-2}$$

où $\mu = \dfrac{1}{Tr\left(\mathbf{H}_0^H \mathbf{H}_0 + \mathbf{H}_1^H \mathbf{H}_1\right)}$, puis un filtrage et désétalement spectral et enfin d'une démodulation OQAM :

$$\hat{\mathbf{X}}_0^m = \mu\mathbf{G}\left(\mathbf{H}_0^* \mathbf{W}_0^m + j^{L-1}\mathbf{H}_1 \mathbf{W}_1^{L-1-m*}\right) \odot \mathbf{M}^{m*} \tag{22-1}$$

$$\hat{\mathbf{X}}_1^m = \mu\mathbf{G}\left(\mathbf{H}_1^* \mathbf{W}_0^m - j^{L-1}\mathbf{H}_0 \mathbf{W}_1^{L-1-m*}\right) \odot \mathbf{M}^{m*} \tag{22-2}$$

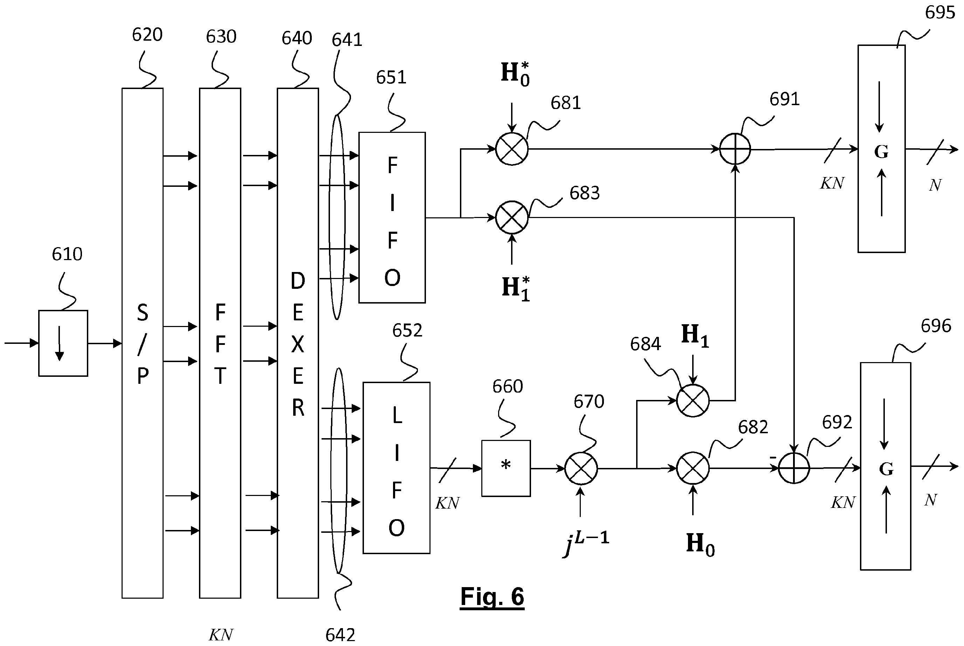

La Fig. 6 représente schématiquement l'architecture d'un récepteur FS-FBMC, selon un premier mode de réalisation de l'invention, permettant de recevoir des séquences de blocs de symboles codés par un codage d'Alamouti par blocs.

Le récepteur comprend un module d'échantillonnage 610 pour échantillonner le signal reçu en bande de base à la cadence $Nf$ où $N$ est le nombre de sous-porteuses et $f$ est la fréquence des symboles FBMC. Les échantillons sont regroupés sous forme de blocs de taille *KN* par un convertisseur série-parallèle 620.

Le récepteur est supposé être synchronisé sur les symboles FBMC, autrement dit le début d'une fenêtre FFT coïncide avec le premier échantillon d'un symbole FBMC (émis par l'une ou l'autre des antennes d'émission). En outre, le récepteur est supposé être synchronisé sur les instants d'utilisation du canal de sorte qu'il connaît les instants de réception des premier et second blocs.

Les blocs d'échantillons sont soumis à une FFT de taille *KN* dans le module de FFT 630.

Un démultiplexeur 640 fournit les vecteurs en sortie de la FFT sur une première sortie 641 lors de la première utilisation du canal et sur une seconde sortie 642 lors de la seconde utilisation du canal. Les *L* vecteurs (de taille *KN*) générés séquentiellement sur la première sortie sont stockés dans une première mémoire tampon 651 configurée sous forme de FIFO. Les L vecteurs générés séquentiellement sur la seconde sortie sont également stockés dans une seconde mémoire tampon 652 configurée sous forme de LIFO. Le module 660 lit ainsi les *L* vecteurs dans l'ordre inverse de l'ordre de stockage (LIFO), de sorte à effectuer un retournement temporel, et effectue en outre une conjugaison complexe de chacun de ces vecteurs. Un multiplieur 670 multiplie les éléments des vecteurs en sortie du module 660 par $(j)^{L-1}$, autrement dit par *j* si *L est* un nombre pair.

Chaque élément d'un vecteur généré sur la première sortie est multiplié en 681 par le conjugué complexe du coefficient du premier canal élémentaire entre la première antenne d'émission et l'antenne de réception, à la fréquence de la sous-porteuse portant l'élément en question (l'opération est symbolisée ici par une multiplication du vecteur en sortie de la mémoire tampon par la matrice $\mathbf{H}_0^*$ ) et en 683 par le conjugué complexe du coefficient du second canal élémentaire entre la seconde antenne d'émission et l'antenne de réception, à la même fréquence de sous-porteuse (l'opération est symbolisée ici par une multiplication du vecteur d'échantillons en sortie de FFT par la matrice $\mathbf{H}_1^*$ ). Il est entendu que les matrices $\mathbf{H}_0$ et $\mathbf{H}_1$ sont ici de taille *KNxKN* et représentent ici les coefficients des canaux élémentaires pour les *KN* sous-porteuses spectralement étalées. On pourra choisir un coefficient de canal identique pour les *K* fréquences issues d'une même sous-porteuse. On suppose les matrices $\mathbf{H}_0$ et $\mathbf{H}_1$ constantes sur la durée de la séquence (hypothèse de *flat fading*).

De manière similaire, chaque élément d'un vecteur généré sur la seconde sortie, est multiplié en 682 par le coefficient du canal entre la première antenne d'émission et l'antenne de réception à la fréquence de la sous-porteuse portant l'élément en question (opération symbolisée par une multiplication du vecteur en sortie de la FFT par la matrice $\mathbf{H}_0$) et en 684 par le coefficient du canal entre la seconde antenne d'émission et l'antenne de réception à la fréquence de la même sous-porteuse (opération symbolisée par une multiplication du vecteur en sortie de la FFT par la matrice $\mathbf{H}_1$).

Les vecteurs en sortie du multiplieur 681 sont sommés, élément à élément, avec ceux en sortie du multiplieur 684, dans le sommateur 691. Les vecteurs successifs, de taille N, en sortie du sommateur 691 sont ensuite fournis à un premier module de désétalement spectral et de filtrage 695.

De même, les vecteurs en sortie du multiplieur 682 sont soustraits, élément à élément, avec ceux en sortie du multiplieur 683 dans le sommateur 692. Les vecteurs successifs, de taille *N*, en sortie du sommateur 692 sont ensuite fournis à un second module de désétalement spectral et de filtrage 696.

Les vecteurs obtenus par les premier et second modules 695 et 696 font ensuite l'objet d'une démodulation OQAM (non réprésentée) pour obtenir les vecteurs de données estimées $\hat{\mathbf{X}}_0^m$ et $\hat{\mathbf{X}}_1^m$ *, m* = 0,..., *L*-1.

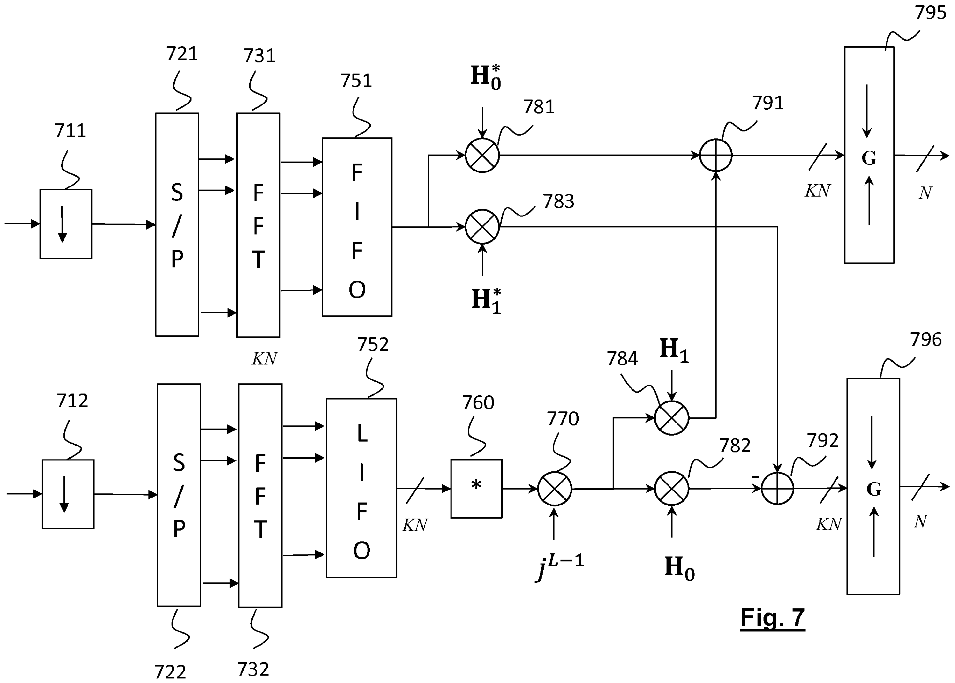

La Fig. 7 représente schématiquement l'architecture d'un récepteur FS-FBMC selon une variante du premier mode de réalisation de l'invention.

A la différence du récepteur FS-FBMC de la Fig. 6, le récepteur comprend ici deux antennes de réception. Le signal reçu sur la première antenne pendant la première utilisation du canal est démodulé en bande de base puis échantillonné à la cadence *Nf* dans l'échantillonneur 711. Les échantillons sont regroupés sous forme de blocs de taille *KN* par le convertisseur série-parallèle 721 avant d'être soumis à une FFT glissante de taille *KN* en 731. Les vecteurs d'échantillons en sortie de la FFT sont ensuite traités sur une première voie.

De manière similaire, le signal reçu sur la seconde antenne pendant la seconde utilisation du canal est démodulé en bande de base puis échantillonné à la cadence *Nf* dans l'échantillonneur 712. Les échantillons sont regroupés sous forme de blocs de taille *KN* par le convertisseur série-parallèle 722 avant d'être soumis à une FFT glissante de taille *KN* en 732. Les vecteurs d'échantillons en sortie de la FFT sont ensuite traités sur une seconde voie.

Les éléments restants 751-796 sont respectivement identiques aux éléments 651-696 de la Fig. 6.

On comprendra qu'à la différence du récepteur FS-FBMC de la Fig. 6, on n'effectue pas de démultiplexage en sortie de FFT, les deux voies étant séparées dès les antennes de réception. Il est cependant nécessaire que le récepteur soit synchronisé sur le symbole FBMC et que, en outre, la première voie soit synchronisée sur les instants de première utilisation du canal et la seconde voie le soit sur les instants de seconde utilisation du canal.

La structure du récepteur de la Fig. 6 ou de la Fig. 7 peut être simplifiée lorsque l'émetteur FBMC utilise, en lieu et place du codage donné par (15), le codage d'Alamouti par blocs défini par :

$$\overline{\mathbf{C}}' = \begin{pmatrix} \overline{\mathbf{X}}_0 & \overline{\mathbf{X}}_1 \\ -\left(j^{L-1}\right)\overline{\mathbf{X}}_1\mathbf{T} & \left(j^{L-1}\right)\overline{\mathbf{X}}_0\mathbf{T} \end{pmatrix} \qquad (23)$$

Dans ce cas, la multiplication par le facteur $(j^{L-1})$ peut être supprimée à la réception et par conséquent le multiplieur 670 ou 770 peut être omis.

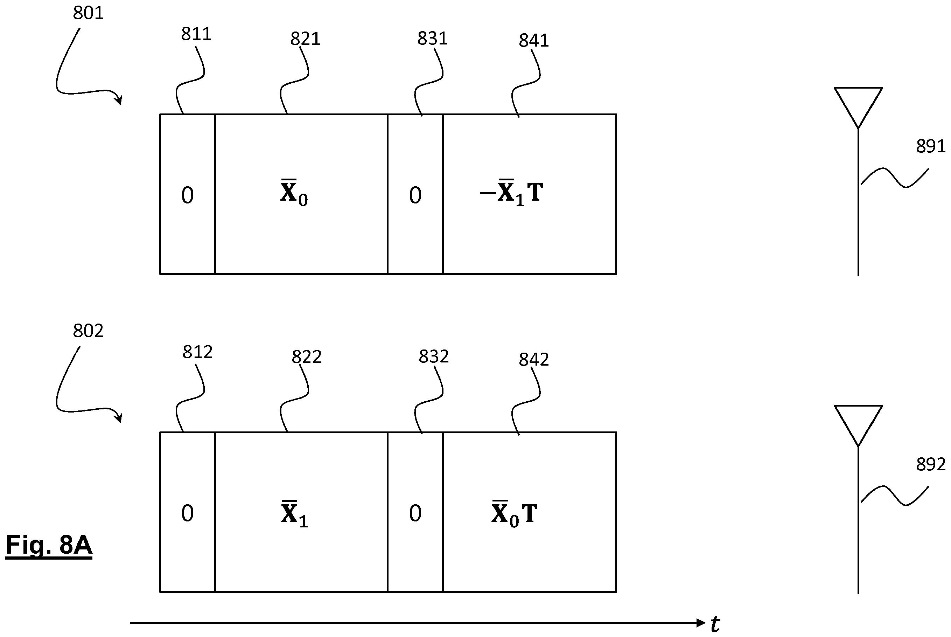

La Fig. 8A représente schématiquement un premier exemple d'émission de deux séquences de blocs de symboles par un émetteur FBMC utilisant un premier codage d'Alamouti par blocs, tel que donné par la matrice de codage donnée par l'expression (15).

Les blocs de données à émettre sont considérés ici en amont de la modulation OQAM.

Une première séquence de blocs, 801, est formée par un premier bloc de garde 811, un premier bloc de $L$ vecteurs de données d'entrée, $\overline{\mathbf{X}}_0$, 821, un second bloc de garde, 831, suivi par un premier bloc transformé, $-\overline{\mathbf{X}}_1\mathbf{T}$, 841, obtenu par retournement temporel et changement de signe du premier bloc de données d'entrée.

Une seconde séquence de blocs, 802, est formée par un premier bloc de garde, 812, un second bloc de $L$ vecteurs de données d'entrée, $\overline{\mathbf{X}}_1$, 822, un second bloc de garde, 832, suivi par un second bloc transformé $\overline{\mathbf{X}}_0\mathbf{T}$, 842, obtenu par retournement temporel et changement de signe du second bloc de données d'entrée.

Les blocs de garde sont constitués de vecteurs nuls pour prévenir une interférence entre les blocs de données et les blocs transformés.

Les première et seconde séquences sont respectivement transmises par les première et seconde antennes, 891 et 892, après modulation FBMC.

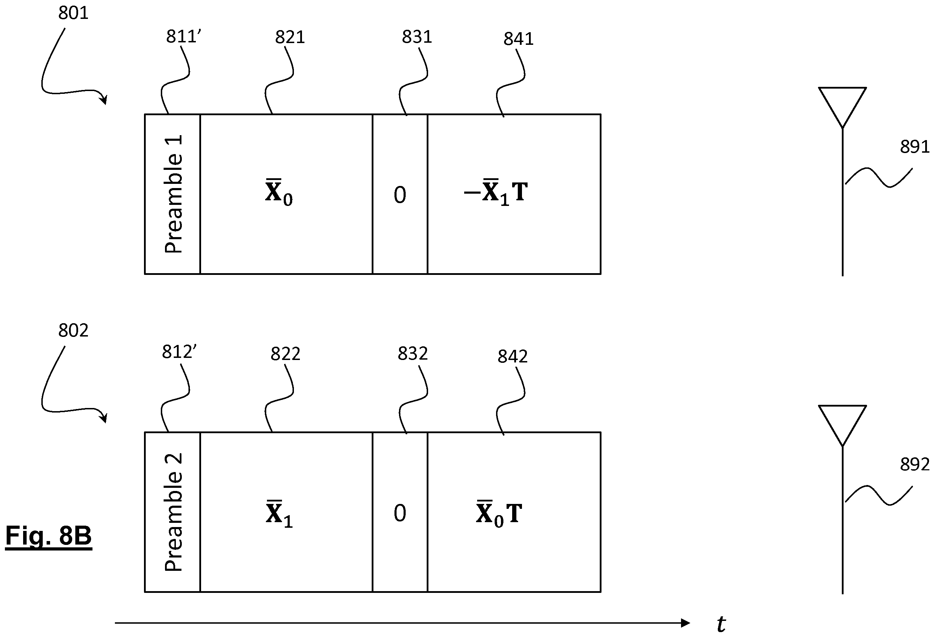

La Fig. 8B représente schématiquement un second exemple d'émission de deux séquences de blocs de symboles par un émetteur FBMC utilisant un second codage d'Alamouti par blocs.

Le second exemple est identique au premier à la différence près que le premier bloc de garde est remplacé dans la première séquence par un premier préambule 811' et dans la seconde séquence par un second préambule, 812'. Les autres blocs restent inchangés et ne sont donc pas décrits à nouveau.

Les premier et second préambules génèrent une interférence affectant les premiers symboles des blocs $\overline{\mathbf{X}}_0$ et $\overline{\mathbf{X}}_1$, interférence qui n'affecte pas de manière symétrique les blocs $-\overline{\mathbf{X}}_1\mathbf{T}$ et $\overline{\mathbf{X}}_0\mathbf{T}$. Cette dissymétrie ne permet pas d'éliminer l'interférence pour les vecteurs de données d'entrée $\mathbf{X}_0^m$, $\mathbf{X}_1^m$ en début de bloc. Toutefois, les symboles du préambule étant connus du récepteur, il est possible d'éliminer cette interférence dès lors que l'on dispose d'une estimation du canal de transmission.

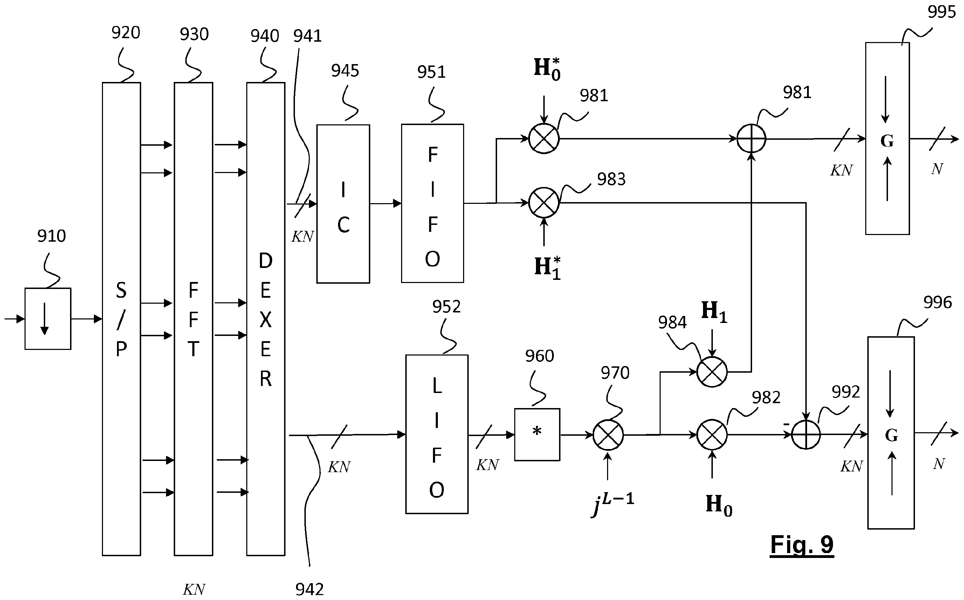

La Fig. 9 représente schématiquement l'architecture d'un récepteur FS-FBMC, selon un second mode de réalisation de l'invention, permettant de recevoir les séquences de blocs de la Fig. 8B.

Hormis l'annuleur d'interférence 945, les éléments 910 à 996 sont identiques aux éléments 610 à 696 déjà décrits en relation avec la Fig. 6.

L'annuleur d'interférence 945 est situé sur la première sortie du démultiplexeur 940 et n'opère donc que lors de la première utilisation du canal. Il a pour objet d'éliminer l'interférence générée au niveau du récepteur par les premier et second préambules 811' et 812' sur la charge utile $\overline{\mathbf{X}}_0$, $\overline{\mathbf{X}}_1$. Plus précisément, l'annuleur d'interférence reçoit une estimation du canal de transmission, à savoir des matrices de transfert des canaux élémentaires, $\mathbf{H}_0$ et $\mathbf{H}_1$. Les préambules 811' et 812' étant connus du récepteur, celui-ci peut reconstituer la contribution des préambules au signal reçu lors de la réception des blocs $\overline{\mathbf{X}}_0$ et $\overline{\mathbf{X}}_1$, étant entendu que seuls les $K+E$ premiers vecteurs reçus au début de ces blocs sont affectés par cette interférence, où $K$ est la longueur du filtre prototype et $E$ l'étalement temporel du canal exprimé en nombre d'échantillons. La contribution des préambules est soustraite du signal reçu, en sortie du module de FFT 830. Une fois l'interférence éliminée, les blocs $\overline{\mathbf{X}}_0$ et $\overline{\mathbf{X}}_1$ transmis peuvent être estimés selon (22-1) et (22-1), étant entendu là encore que le terme $j^{L-1}$ peut y être omis si l'on utilise le codage d'Alamouti par blocs défini par (23). L'homme du métier comprendra en outre que ce second mode de réalisation pourra être également décliné selon la variante de la Fig. 7 en ajoutant un annuleur d'interférence en sortie du module de FFT 731.

## Revendications

**1.** Méthode de réception de signaux transmis par un émetteur FBMC utilisant un codage Alamouti par blocs, l'émetteur FBMC utilisant une pluralité $N$ de sous-porteuses et un facteur de chevauchement K de filtres prototypes, le signal reçu par le récepteur étant translaté en bande de base, échantillonné à la fréquence *Nf* où *f* est la demie-fréquence des symboles FBMC, puis soumis à une FFT glissante de taille *KN* pour fournir des vecteurs d'échantillons, **caractérisée en ce que** lesdits vecteurs d'échantillons sont reçus sur une première voie pendant une première utilisation de canal et sur une seconde voie pendant une seconde utilisation de canal, le canal comprenant un premier canal élémentaire entre une première antenne de l'émetteur et une première antenne du récepteur et un second canal élémentaire entre une seconde antenne de l'émetteur et une seconde antenne du récepteur, lesdits premier et second canaux élémentaires étant respectivement **caractérisés par** une première et une seconde matrice de transfert ($\mathbf{H}_0$,$\mathbf{H}_1$), chaque vecteur $\left( \mathbf{W}_0^m \right)$ d'une séquence de vecteurs reçus sur la première voie étant multiplié (681,683) par le conjugué de la première matrice de transfert pour fournir un premier vecteur et par le conjugué de la seconde matrice de transfert pour fournir un second vecteur, une séquence de vecteurs reçus sur la seconde voie étant retournée temporellement (652) et chaque vecteur $\left( \mathbf{W}_1^{L-1-m} \right)$ de la seconde séquence étant conjugué (660) avant d'être multiplié (682,684) par la première matrice de transfert pour fournir un troisième vecteur et par la seconde matrice de transfert pour fournir un quatrième vecteur, les premier et quatrième vecteurs étant combinés (691) pour fournir un premier vecteur combiné, les second et troisième vecteurs étant combinés (692) pour fournir un second vecteur combiné, les premier et second vecteurs combinés étant spectralement désétalés et filtrés (695,696) dans le domaine fréquentiel par les filtres prototypes pour fournir respectivement une estimation d'un premier vecteur de données $\left( \hat{\mathbf{X}}_0^m \right)$ émis via la première antenne de l'émetteur et d'un second vecteur de données $\left( \hat{\mathbf{X}}_1^m \right)$ émis via la seconde antenne de l'émetteur.

2. Méthode de réception de signaux transmis par un émetteur FBMC selon la revendication 1, **caractérisée en ce que** les première et seconde antennes du récepteur forment une seule antenne, et que lesdits vecteurs d'échantillons sont démultiplexés sur la première voie pendant la première utilisation du canal et sur la seconde voie pendant la seconde utilisation du canal.

3. Méthode de réception de signaux transmis par un émetteur FBMC selon la revendication 1, **caractérisée en ce que** les première et seconde antennes sont distinctes, la première voie étant associée à la première antenne du récepteur et la seconde voie étant associé à la seconde antenne du récepteur.

4. Méthode de réception de signaux transmis par un émetteur FBMC selon l'une des revendications précédentes, l'émetteur utilisant comme matrice de codage d'Alamouti par blocs la matrice :

$$\overline{\mathbf{C}} = \begin{pmatrix} \overline{\mathbf{X}}_0 & \overline{\mathbf{X}}_1 \\ -\overline{\mathbf{X}}_1\mathbf{T} & \overline{\mathbf{X}}_0\mathbf{T} \end{pmatrix}$$

où $\overline{\mathbf{X}}_0$ et $\overline{\mathbf{X}}_1$ sont des premier et second blocs de vecteurs de données d'entrée transmis pendant la première utilisation du canal respectivement via la première antenne et la seconde antenne de l'émetteur, $\overline{\mathbf{X}}_1\mathbf{T}$ est un premier bloc transformé obtenu par retournement temporel et du second bloc, $\overline{\mathbf{X}}_0\mathbf{T}$ est un second bloc transformé obtenu par retournement temporel du premier bloc, les blocs -$\overline{\mathbf{X}}_1\mathbf{T}$ et $\overline{\mathbf{X}}_0\mathbf{T}$ étant transmis pendant la seconde utilisation du canal respectivement via la première antenne et la seconde antenne de l'émetteur, **caractérisée en ce que** les vecteurs de la seconde séquence sont multipliés (670) par un facteur ($j^{L-1}$) où *L* est la taille des premier et second blocs de vecteurs de données d'entrée, après conjugaison et avant multiplication par les première et seconde matrices de transfert.

5. Méthode de réception de signaux transmis par un récepteur FBMC selon la revendication 4, **caractérisée en ce que** le vecteur de données d'entrée de rang *m* dans le premier bloc de vecteurs de données d'entrée, $\mathbf{X}_0^m$, et le vecteur de données d'entrée de rang m dans le second bloc de vecteurs de données d'entrée, $\mathbf{X}_1^m$, sont estimés par :

$$\hat{\mathbf{X}}_0^m = \mu\mathbf{G}\left( \mathbf{H}_0^*\mathbf{W}_0^m + j^{L-1}\mathbf{H}_1\mathbf{W}_1^{L-1-m*} \right) \odot \mathbf{M}^{m*}$$

$$\hat{\mathbf{X}}_1^m = \mu \mathbf{G}\left(\mathbf{H}_1^* \mathbf{W}_0^m - j^{L-1}\mathbf{H}_0 \mathbf{W}_1^{L-1-m*}\right) \odot \mathbf{M}^{m*}$$

où $\hat{\mathbf{X}}_0^m$ et $\hat{\mathbf{X}}_1^m$ sont respectivement les estimés des vecteurs $\mathbf{X}_0^m$ et $\mathbf{X}_1^m$, $\mathbf{H}_0, \mathbf{H}_1$ sont respectivement les première et seconde matrices de transfert, $\mathbf{W}_0^m$ le vecteur de rang m reçu sur la première voie, $\mathbf{W}_1^{L-1-m}$ le vecteur de rang $L\text{-}1\text{-}m$ reçu sur la seconde voie, $\mathbf{M}^m$ un vecteur représentant un codage OQAM des vecteurs $\mathbf{X}_0^m$ et $\mathbf{X}_1^m$, G une matrice représentant, dans le domaine fréquentiel, un désétalement spectral et un filtrage par les filtres prototypes, $\mu$ est un coefficient de normalisation et $\odot$ représente le produit de Hadamard.

6. Méthode de réception de signaux transmis par un émetteur FBMC selon l'une des revendications 1 à 3, **caractérisée en ce que** l'émetteur utilisant comme matrice de codage d'Alamouti par blocs la matrice :

$$\overline{\mathbf{C}}' = \begin{pmatrix} \overline{\mathbf{X}}_0 & \overline{\mathbf{X}}_1 \\ -\left(j^{L-1}\right)\overline{\mathbf{X}}_1\mathbf{T} & \left(j^{L-1}\right)\overline{\mathbf{X}}_0\mathbf{T} \end{pmatrix}$$

où $\overline{\mathbf{X}}_0$ et $\overline{\mathbf{X}}_1$ sont des premier et second blocs de vecteurs de données d'entrée transmis pendant la première utilisation du canal respectivement via la première antenne et la seconde antenne de l'émetteur, $\overline{\mathbf{X}}_1\mathbf{T}$ est un premier bloc transformé obtenu par retournement temporel et du second bloc, $\overline{\mathbf{X}}_0\mathbf{T}$ est un second bloc transformé obtenu par retournement temporel du premier bloc, **caractérisée en ce que** les vecteurs de la seconde séquence, après conjugaison, sont directement multipliés par les première et seconde matrices de transfert.

7. Méthode de réception de signaux transmis par un émetteur FBMC selon la revendication 6, **caractérisée en ce que** le vecteur de données d'entrée de rang *m* dans le premier bloc de vecteurs de données d'entrée, $\mathbf{X}_0^m$, et le vecteur de données d'entrée de rang m dans le second bloc de vecteurs de données d'entrée, $\mathbf{X}_1^m$, sont estimés par :

$$\hat{\mathbf{X}}_0^m = \mu \mathbf{G}\left(\mathbf{H}_0^* \mathbf{W}_0^m + \mathbf{H}_1 \mathbf{W}_1^{L-1-m*}\right) \odot \mathbf{M}^{m*}$$

$$\hat{\mathbf{X}}_1^m = \mu \mathbf{G}\left(\mathbf{H}_1^* \mathbf{W}_0^m - \mathbf{H}_0 \mathbf{W}_1^{L-1-m*}\right) \odot \mathbf{M}^{m*}$$

où $\hat{\mathbf{X}}_0^m$ et $\hat{\mathbf{X}}_1^m$ sont respectivement les estimés des vecteurs $\mathbf{X}_0^m$ et $\mathbf{X}_1^m$, $\mathbf{H}_0, \mathbf{H}_1$ sont respectivement les première et seconde matrices de transfert, $\mathbf{W}_0^m$ le vecteur de rang m reçu sur la première voie, $\mathbf{W}_1^{L-1-m}$ le vecteur de rang $L\text{-}1\text{-}m$ reçu sur la seconde voie, $\mathbf{M}^m$ un vecteur représentant un codage OQAM des vecteurs $\mathbf{X}_0^m$ et $\mathbf{X}_1^m$, G une matrice représentant, dans le domaine fréquentiel, un désétalement spectral et un filtrage par les filtres prototypes, $\mu$ est un coefficient de normalisation et $\odot$ représente le produit de Hadamard.

8. Méthode de réception de signaux transmis par un émetteur FBMC selon l'une des revendications 4 à 7, les premier et second blocs de vecteurs de données d'entrée étant précédés respectivement d'un premier et d'un second préambules (811',812'), un premier bloc de garde (831) constitué de vecteurs nuls séparant le premier bloc de vecteurs de données et le premier bloc transformé (841), un second bloc de garde (832) constitué de vecteurs nuls séparant le second bloc de vecteurs de données et le second bloc transformé (842), **caractérisée en ce que** les premier et second préambules sont connus du récepteur et que l'on effectue sur la première voie, en sortie de la FFT glissante, une élimination de l'interférence affectant les vecteurs reçus sur la première voie par soustraction à cette voie de la contribution due aux premier et second préambules.

**Patentansprüche**

1. Verfahren zum Empfangen von Signalen, die durch einen FBMC-Sender unter Verwendung einer Alamouti-Blockkodierung übertragen werden, wobei der FBMC-Sender eine Mehrzahl $N$ von Unterträgern und einen Überlappungsfaktor $K$ von Prototypfiltern verwendet, wobei das durch den Empfänger empfangene Signal ins Basisband umgesetzt wird, mit der Frequenz $Nf$ abgetastet wird, wobei $f$ die halbe Frequenz der FBMC-Symbole ist, dann einer gleitenden FFT der Größe $KN$ unterzogen wird, um Vektoren von Abtastwerten zu liefern, **dadurch gekennzeichnet, dass** die Vektoren von Abtastwerten während einer ersten Kanalverwendung auf einem ersten Weg empfangen werden und während einer zweiten Kanalverwendung auf einem zweiten Weg, wobei der Kanal einen ersten Elementarkanal zwischen einer ersten Antenne des Senders und einer ersten Antenne des Empfängers und einen zweiten Elementarkanal zwischen einer zweiten Antenne des Senders und einer zweiten Antenne des Empfängers umfasst, wobei der erste und der zweite Elementarkanal durch eine erste beziehungsweise eine zweite Transfermatrix ($H_0, H_1$) gekennzeichnet sind, wobei jeder Vektor $\left( \mathbf{W}_0^m \right)$ einer Sequenz von Vektoren, die auf dem ersten Weg empfangen werden, mit der Konjugierten der ersten Transfermatrix multipliziert wird (681, 683), um einen ersten Vektor zu liefern, und mit der Konjugierten der zweiten Transfermatrix, um einen zweiten Vektor zu liefern, wobei eine Sequenz von Vektoren, die auf dem zweiten Weg empfangen werden, temporär umgekehrt wird (652) und jeder Vektor $\left( \mathbf{W}_1^{L-1-m} \right)$ der zweiten Sequenz konjugiert wird (660), bevor er mit der ersten Transfermatrix multipliziert wird (682, 684), um einen dritten Vektor zu liefern, und mit der zweiten Transfermatrix, um einen vierten Vektor zu liefern, wobei der erste und der vierte Vektor kombiniert werden (691), um einen ersten kombinierten Vektor zu liefern, wobei der zweite und der dritte Vektor kombiniert werden (692), um einen zweiten kombinierten Vektor zu liefern, wobei der erste und der zweite kombinierte Vektor spektral entspreizt und in der Frequenzdomäne durch die Prototypfilter gefiltert werden (695, 696), um eine Abschätzung eines ersten Vektors von Daten $\left( \hat{\mathbf{X}}_0^m \right)$ zu liefern, die über die erste Antenne des Senders gesendet werden, beziehungsweise eines zweiten Vektors von Daten $\left( \hat{\mathbf{X}}_1^m \right)$, die über die zweite Antenne des Senders gesendet werden.

2. Verfahren zum Empfangen von Signalen, die durch einen FBMC-Sender übertragen werden, nach Anspruch 1, **dadurch gekennzeichnet, dass** die erste und die zweite Antenne des Empfängers eine einzige Antenne bilden, und dass die Vektoren von Abtastwerten auf dem ersten Weg während der ersten Kanalverwendung und auf dem zweiten Weg während der zweiten Kanalverwendung demultiplexiert werden.

3. Verfahren zum Empfangen von Signalen, die durch einen FBMC-Sender übertragen werden, nach Anspruch 1, **dadurch gekennzeichnet, dass** die erste und die zweite Antenne getrennt sind, wobei der erste Weg der ersten Antenne des Empfängers zugeordnet ist und der zweite Weg der zweiten Antenne des Empfängers zugeordnet ist.

4. Verfahren zum Empfangen von Signalen, die durch einen FBMC-Sender übertragen werden, nach einem der vorhergehenden Ansprüche, wobei der Sender als Alamouti-Blockkodierungsmatrix die folgende Matrix verwendet:

$$\overline{\mathbf{C}} = \begin{pmatrix} \overline{\mathbf{X}}_0 & \overline{\mathbf{X}}_1 \\ -\overline{\mathbf{X}}_1 \mathbf{T} & \overline{\mathbf{X}}_0 \mathbf{T} \end{pmatrix}$$

wobei $\overline{\mathbf{X}}_0$ und $\overline{\mathbf{X}}_1$ ein erster und ein zweiter Block von Vektoren von Eingangsdaten sind, übertragen während der ersten Kanalverwendung über die erste Antenne beziehungsweise die zweite Antenne des Senders, $\overline{\mathbf{X}}_1 \mathbf{T}$ ein erster transformierter Block ist, erhalten durch temporelle Umkehrung und des zweiten Blocks, $\overline{\mathbf{X}}_0 \mathbf{T}$ ein zweiter transfor-mierter Block ist, erhalten durch temporelle Umkehrung des ersten Blocks, wobei die Blöcke $-\overline{\mathbf{X}}_1 \mathbf{T}$ und $\overline{\mathbf{X}}_0 \mathbf{T}$ während der zweiten Kanalverwendung über die erste Antenne beziehungsweise die zweite Antenne des Senders übertragen werden, **dadurch gekennzeichnet, dass** die Vektoren der zweiten Sequenz mit einem Faktor ($j^{L-1}$) multipliziert werden (670), wobei L die Größe des ersten und des zweiten Blocks von Vektoren von Eingangsdaten ist, nach der Konjugierung und vor der Multiplikation mit der ersten und der zweiten Transfermatrix.

5. Verfahren zum Empfangen von Signalen, die durch einen FBMC-Empfänger übertragen werden, nach Anspruch 4, **dadurch gekennzeichnet, dass** der Vektor von Eingangsdaten vom Rang $m$ in dem ersten Block von Vektoren

von Eingangsdaten, $\mathbf{X}_0^m$, und der Vektor von Eingangsdaten vom Rang $m$ in dem zweiten Block von Vektoren von Eingangsdaten, $\mathbf{X}_1^m$, abgeschätzt werden durch:

$$\hat{\mathbf{X}}_0^m = \mu \mathbf{G}\left(\mathbf{H}_0^* \mathbf{W}_0^m + j^{L-1}\mathbf{H}_1 \mathbf{W}_1^{L-1-m^*}\right) \odot \mathbf{M}^{m^*}$$

$$\hat{\mathbf{X}}_1^m = \mu \mathbf{G}\left(\mathbf{H}_1^* \mathbf{W}_0^m - j^{L-1}\mathbf{H}_0 \mathbf{W}_1^{L-1-m^*}\right) \odot \mathbf{M}^{m^*}$$

wobei $\hat{\mathbf{X}}_0^m$ und $\hat{\mathbf{X}}_1^m$ die Abschätzwerte der Vektoren $\mathbf{X}_0^m$ beziehungsweise $\mathbf{X}_1^m$ sind, $\mathbf{H}_0$, $\mathbf{H}_1$ die erste beziehungsweise die zweite Transfermatrix sind, $\mathbf{W}_0^m$ der Vektor vom Rang m ist, empfangen auf dem ersten Weg, $\mathbf{W}_1^{L-1-m}$ der Vektor vom Rang $L$-1-$m$, empfangen auf dem zweiten Weg, $\mathbf{M}^m$ ein Vektor, der eine OQAM-Kodierung der Vektoren $\mathbf{X}_0^m$ und $\mathbf{X}_1^m$ repräsentiert, $\mathbf{G}$ eine Matrix, die in der Frequenzdomäne eine spektrale Entspreizung und eine Filterung durch die Prototypfilter repräsentiert, $\mu$ ein Normalisierungskoeffizient ist, und $\odot$ das Hadamard-Produkt repräsentiert.

6. Verfahren zum Empfangen von Signalen, die durch einen FBMC-Sender übertragen werden, nach einem der Ansprüche 1 bis 3, **dadurch gekennzeichnet, dass** der Sender als Alamouti-Blockkodierungsmatrix die folgende Matrix verwendet:

$$\overline{\mathbf{C}}' = \begin{pmatrix} \overline{\mathbf{X}}_0 & \overline{\mathbf{X}}_1 \\ -\left(j^{L-1}\right)\overline{\mathbf{X}}_1 \mathbf{T} & \left(j^{L-1}\right)\overline{\mathbf{X}}_0 \mathbf{T} \end{pmatrix}$$

wobei $\overline{\mathbf{X}}_0$ und $\overline{\mathbf{X}}_1$ der erste und der zweite Block von Vektoren von Eingangsdaten sind, übertragen während der ersten Kanalverwendung über die erste Antenne beziehungsweise die zweite Antenne des Senders, $\overline{\mathbf{X}}_1 \mathbf{T}$ ein erster transformierter Block ist, erhalten durch temporelle Umkehrung und des zweiten Blocks, $\overline{\mathbf{X}}_0 \mathbf{T}$ ein zweiter transformierter Block ist, erhalten durch temporelle Umkehrung des ersten Blocks, **dadurch gekennzeichnet, dass** die Vektoren der zweiten Sequenz nach der Konjugierung direkt mit der ersten und der zweiten Transfermatrix multipliziert werden.

7. Verfahren zum Empfangen von Signalen, die durch einen FBMC-Sender übertragen werden, nach Anspruch 6, **dadurch gekennzeichnet, dass** der Vektor von Eingangsdaten vom Rang $m$ in dem ersten Block von Vektoren von Eingangsdaten, $\mathbf{X}_0^m$, und der Vektor von Eingangsdaten vom Rang $m$ in dem zweiten Block von Vektoren von Eingangsdaten, $\mathbf{X}_1^m$, abgeschätzt werden durch:

$$\hat{\mathbf{X}}_0^m = \mu \mathbf{G}\left(\mathbf{H}_0^* \mathbf{W}_0^m + \mathbf{H}_1 \mathbf{W}_1^{L-1-m^*}\right) \odot \mathbf{M}^{m^*}$$

$$\hat{\mathbf{X}}_1^m = \mu \mathbf{G}\left(\mathbf{H}_1^* \mathbf{W}_0^m - \mathbf{H}_0 \mathbf{W}_1^{L-1-m^*}\right) \odot \mathbf{M}^{m^*}$$

wobei $\hat{\mathbf{X}}_0^m$ und $\hat{\mathbf{X}}_1^m$ die Abschätzwerte der Vektoren $\mathbf{X}_0^m$ beziehungsweise $\mathbf{X}_1^m$ sind, $\mathbf{H}_0$, $\mathbf{H}_1$ die erste beziehungs-

weise die zweite Transfermatrix sind, $\mathbf{W}_0^m$ der Vektor vom Rang m ist, empfangen auf dem ersten Weg, $\mathbf{W}_1^{L-1-m}$ der Vektor vom Rang L-1-m, empfangen auf dem zweiten Weg, $\mathbf{M}^m$ ein Vektor, der eine OQAM-Kodierung der Vektoren $\mathbf{X}_0^m$ und $\mathbf{X}_1^m$ repräsentiert, **G** eine Matrix, die in der Frequenzdomäne eine spektrale Entspreizung und eine Filterung durch die Prototypfilter repräsentiert, $\mu$ ein Normalisierungskoeffizient ist, und $\odot$ das Hadamard-Produkt repräsentiert.

8. Verfahren zum Empfangen von Signalen, die durch einen FBMC-Sender übertragen werden, nach einem der Ansprüche 4 bis 7, wobei dem ersten und dem zweiten Block von Vektoren von Eingangsdaten eine erste beziehungsweise eine zweite Präambel (811', 812') vorhergeht, ein ersten Schutzblock (831), gebildet von Nullvektoren, die den ersten Block von Vektoren von Daten und den ersten transformierten Block (841) separieren, ein zweiter Schutzblock (832), gebildet von Nullvektoren, die den zweiten Block von Vektoren von Daten und den zweiten transformierten Block (842) separieren, **dadurch gekennzeichnet, dass** die erste und die zweite Präambel dem Empfänger bekannt sind, und dass man auf dem ersten Weg am Ausgang der gleitenden FFT eine Eliminierung der Interferenz, die die Vektoren beeinträchtigt, die auf dem ersten Weg empfangen werden, durchführt durch Subtraktion, auf diesem Weg, des Beitrags aufgrund der ersten und der zweiten Präambel.

## Claims

1. A method for receiving signals transmitted by an FBMC transmitter using Alamouti block coding, the FBMC transmitter using a plurality N of subcarriers and an overlapping factor K of prototype filters, the signal received by the receiver being baseband translated, sampled at the frequency Nf where f is the half-frequency of FBMC symbols, and then subjected to a sliding FFT having a size KN to provide sample vectors, **characterised in that** said sample vectors are received on a first pathway during a first channel use and on a second pathway during a second channel use, the channel comprising a first elementary channel between a first antenna of the transmitter and a first antenna of the receiver and a second elementary channel between a second antenna of the transmitter and a second antenna of the receiver, said first and second elementary channels being respectively **characterised by** a first and a second transfer matrix ($\mathbf{H}_0$, $\mathbf{H}_1$), each vector $\left(\mathbf{W}_o{}^m\right)$ of a sequence of vectors received on the first pathway being multiplied (681, 683) by the conjugate of the first transfer matrix to provide a first vector and by the conjugate of the second transfer matrix to provide a second vector, a sequence of vectors received on the second pathway being time reversed (652) and each vector $\left(\mathbf{W}_1{}^{L-1-m}\right)$ of the second sequence being conjugated (660) before being multiplied (682, 684) by the first transfer matrix to provide a third vector and by the second transfer matrix to provide a fourth vector, the first and fourth vectors being combined (691) to provide a first combined vector, the second and third vectors being combined (692) to provide a second combined vector, the first and second combined vectors being spectrally despread and filtered (695, 696) in the frequency domain by the prototype filters to respectively provide an estimation of a first data vector $\left(\widehat{\mathbf{X}}_0^m\right)$ transmitted via the first antenna of the transmitter and of a second data vector $\left(\widehat{\mathbf{X}}_1^m\right)$ transmitted via the second antenna of the transmitter.

2. The method for receiving signals transmitted by an FBMC transmitter according to claim 1, **characterised in that** the first and second antennas of the receiver form a single antenna, and **in that** said sample vectors are demultiplexed on the first pathway during the first channel use and on the second pathway during the second channel use.

3. The method for receiving signals transmitted by an FBMC transmitter according to claim 1, **characterised in that** the first and second antennas are distinct, the first pathway being associated with the first antenna of the receiver and the second pathway being associated with the second antenna of the receiver.

4. The method for receiving signals transmitted by an FBMC transmitter according to one of the previous claims, the transmitter using as an Alamouti block coding matrix the following matrix:

$$\overline{C} = \begin{pmatrix} \overline{X}_0 & \overline{X}_1 \\ -\overline{X}_1 T & \overline{X}_0 T \end{pmatrix}$$

where $\overline{X}_0$ and $\overline{X}_1$ are first and second blocks of input data vectors transmitted during the first channel use respectively via the first antenna and the second antenna of the transmitter, $\overline{X}_1 T$ is a first transformed block obtained by time reversing and the second block, $\overline{X}_0 T$ is a second transformed block obtained by time reversing the first block, blocks $-\overline{X}_1 T$ and $\overline{X}_0 T$ being transmitted during the second channel use respectively via the first antenna and the second antenna of the transmitter, **characterised in that** the vectors of the second sequence are multiplied (670) by a factor ($j^{L-1}$) where $L$ is the size of the first and second blocks of input data vectors, after conjugation and before multiplication by the first and second transfer matrices.

5. The method for receiving signals transmitted by an FBMC receiver according to claim 4, **characterised in that** the input data vector with rank $m$ in the first block of input data vectors, $X_0{}^m$, and the input data vector with rank m in the second block of input data vectors, $X_1{}^m$, are estimated by:

$$\hat{X}_0^m = \mu G \left( H_0^* W_0^m + j^{L-1} H_1 W_1^{L-1-m*} \right) \odot M^{m*}$$

$$\hat{X}_1^m = \mu G \left( H_1^* W_0^m - j^{L-1} H_0 W_1^{L-1-m*} \right) \odot M^{m*}$$

where $\widehat{X}_0^m$ and $\widehat{X}_1^m$ are respectively the estimates of the vectors $X_0{}^m$ and $X_1{}^m$, $H_0$, $H_1$ are respectively the first and second transfer matrices, $W_0{}^m$ the vector with rank m received on the first pathway, $W_1{}^{L-1-m}$ the vector with rank $L-1-m$ received on the second pathway, $M^m$ is a vector representing an OQAM coding of the vectors $X_0{}^m$ and $X_1{}^m$, $G$ a matrix representing, in the frequency domain, a spectral dispreading and filtering by the prototype filters, $\mu$ is a normalisation coefficient and $\odot$ represents the Hadamard product.

6. The method for receiving signals transmitted by an FBMC transmitter according to one of claims 1 to 3, **characterised in that** the transmitter uses as an Alamouti block coding matrix the following matrix:

$$\overline{C}' = \begin{pmatrix} \overline{X}_0 & \overline{X}_1 \\ -\left( j^{L-1} \right) \overline{X}_1 T & \left( j^{L-1} \right) \overline{X}_0 T \end{pmatrix}$$

where $\overline{X}_0$ and $\overline{X}_1$ are first and second blocks of input data vectors transmitted during the first channel use respectively via the first antenna and second antenna of the transmitter, $\overline{X}_1 T$ is a first transformed block obtained by time reversing the second block, $\overline{X}_0 T$ is a second transformed block obtained by time reversing the first block, **characterised in that** the vectors of the second sequence, after conjugation, are directly multiplied by the first and second transfer matrices.

7. The method for receiving signals transmitted by an FBMC transmitter according to claim 6, **characterised in that** the input data vector with rank m in the first block of input data vectors, $X_0{}^m$, and the input data vector with rank m in the second block of input data vectors, $X_1{}^m$, are estimated by:

$$\hat{X}_0^m = \mu G \left( H_0^* W_0^m + H_1 W_1^{L-1-m*} \right) \odot M^{m*}$$

$$\hat{X}_1^m = \mu G \left( H_1^* W_0^m - H_0 W_1^{L-1-m*} \right) \odot M^{m*}$$

where $\widehat{\mathbf{X}}_0^m$ and $\widehat{\mathbf{X}}_1^m$ are respectively the estimates of the vectors $X_0{}^m$ and $\mathbf{X}_1{}^m$, $\mathbf{H}_0$, $\mathbf{H}_1$ are respectively the first and second transfer matrices, $\mathbf{W}_0{}^m$ the vector with rank m received on the first pathway, $\mathbf{W}_1{}^{L\text{-}1\text{-}m}$ the vector with rank $L$-1-$m$ received on the second pathway, $\mathbf{M}^m$ a vector representing an OQAM coding of the vectors $\mathbf{X}_0{}^m$ and $\mathbf{X}_1{}^m$, $\mathbf{G}$ a matrix representing, in the frequency domain, a spectral dispreading and filtering by the prototype filters, $\mu$ is a normalisation coefficient and $\odot$ represents the Hadamard product.

8. The method for receiving signals transmitted by an FBMC transmitter according to one of claims 4 to 7, the first and second blocks of input data vectors being respectively preceded by a first and a second preambles (811', 812'), a first guard block (831) consisting of zero vectors separating the first block of data vectors and the first transformed block (841), a second guard block (832) consisting of zero vectors separating the second block of data vectors and the second transformed block (842), **characterised in that** the first and second preambles are known to the receiver and that, on the first pathway, at the output of the sliding FFT, removing the interference affecting the vectors received on the first pathway by subtracting from this pathway the contribution due to the first and second preambles, is performed.

**Fig. 1**

$d_i[n]$

$d_{i+1}[n]$

$d_{i+2}[n]$

$G_3 d_i[n] + G_1 d_{i-1}[n]$

$G_2 d_i[n] + G_2 d_{i-1}[n]$

$G_1 d_i[n] + G_3 d_{i-1}[n]$

$G_0 d_i[n]$

$G_1 d_i[n] + G_3 d_{i+1}[n]$

$G_2 d_i[n] + G_2 d_{i+1}[n]$

$G_3 d_i[n] + G_1 d_{i+1}[n]$

$G_0 d_{i+1}[n]$

$G_3 d_{i+2}[n] + G_1 d_{i+1}[n]$

$G_2 d_{i+2}[n] + G_2 d_{i+1}[n]$

$G_1 d_{i+2}[n] + G_3 d_{i+1}[n]$

$G_0 d_{i+2}[n]$

$G_1 d_{i+2}[n] + G_3 d_{i+3}[n]$

$G_2 d_{i+2}[n] + G_2 d_{i+3}[n]$

$G_3 d_{i+2}[n] + G_1 d_{i+3}[n]$

**Fig. 2A**

$d_{i,k}^r[n]$

$d_{i+1,k}^r[n]$

$d_{i+2,k}^r[n]$

$d_i^r[n]$

$d_{i+1}^r[n]$

$d_{i+2}^r[n]$

**Fig. 2B**

$KT$

$T/2$

$FBMC_{n-3}$

$FBMC_{n-2}$

$FBMC_{n-1}$

$FBMC_{n}$

$FBMC_{n+1}$

$FBMC_{n+2}$

$FBMC_{n+3}$

$\Sigma$

**Fig. 3**

EP 3 232 627 B1

EP 3 232 627 B1

401

411 421 431 441 451

| 0 | $\overline{\mathbf{X}}_0$ | 0 | $-\overline{\mathbf{X}}_1^* \mathbf{T}$ | 0 |

491

402

412 422 432 442 452

**Fig. 4**

| 0 | $\overline{\mathbf{X}}_1$ | 0 | $\overline{\mathbf{X}}_0^* \mathbf{T}$ | 0 |

492

$t$

**Fig. 5**

EP 3 232 627 B1

**Fig. 6**

EP 3 232 627 B1

**Fig. 7**

EP 3 232 627 B1

EP 3 232 627 B1

**Fig. 8A**

**Fig. 8B**

EP 3 232 627 B1

**Fig. 9**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **B. HIROSAKI.** An orthogonally multiplexed QAM system using the discrète Fourier transform. *IEEE Trans on Comm.,* Juillet 1981, vol. 29 (7), 982-989
- **P. SIOHAN et al.** Analysis and design of OFDM/OQAM systems based on filterbank theory. *IEEE Trans. on signal processing,* Mai 2002, vol. 50 (5), 1170-1183
- FS-FBMC: An alternative scheme for filter bank based multicarrier transmission'',COMMUNICATIONS CONTROL AND SIGNAL PROCESSING (IS-CCSP). **MAURICE BELLANGER.** INTERNATIONAL SYMPOSIUM ON. IEEE, 02 Mai 2012
- **M. RENFORS et al.** A block-Alamouti scheme for filter bank based multicarrier transmission. *Proceedings of European Wireless Conférence EW 2010,* 12 Avril 2010, 1031-1037
- *Proc. IEEE of Int'I Conf. on Communications, ICC 2000,* Juin 2000, 307-311